# EUROPÄISCHE PATENTSCHRIFT

(11) **EP 4 377 205 B1**
(45) Veröffentlichungstag und Bekanntmachung des Hinweises auf die Patenterteilung: **19.08.2026**
(21) Anmeldenummer: 22750723.3
(22) Anmeldetag: 26.07.2022
(51) Int. Cl.: B64D 11/06, B60N 2/75

(54) **FLUGZEUGSITZVORRICHTUNG**
AIRCRAFT SEAT DEVICE
DISPOSITIF DE SIÈGE D'AÉRONEF

(30) Priorität: 26.07.2021 DE 102021119323
(43) Veröffentlichungstag der Anmeldung: 05.06.2024
(73) Patentinhaber: Recaro Aircraft Seating GmbH & Co. KG, 74523 Schwäbisch Hall (DE)
(72) Erfinder: FRÖBEL, Marcel, 74523 Schwäbisch Hall (DE); PAWEL, Pronobis, 74544 Michelbach an der Bilz (DE); LAHMEYER, Christoph, 89081 Ulm (DE); DUKIN, Jürgen, 74405 Gaildorf (DE)
(74) Vertreter: Daub, Thomas
(86) Internationale Anmeldenummer: PCT/EP2022/070969
(87) Internationale Veröffentlichungsnummer: WO 2023/006762

(56) Entgegenhaltungen:
- WO-A1-2013/163260
- US-A1- 2011 272 991

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einem Sitzteiler, mit einer Armlehne, die zwischen einer Gebrauchsstellung und einer Nichtgebrauchsstellung zu dem Sitzteiler verschwenkbar ist und die einen Armlehnengrundkörper aufweist, und mit einem Anbindungsmodul vorgeschlagen worden, das dazu vorgesehen ist, die Armlehne schwenkbar zu dem Sitzteiler zu lagern, wobei der Armlehnengrundkörper in einem vollständig montierten Zustand über das Anbindungsmodul mit dem Sitzteiler gekoppelt ist. Dokumente WO2013163260A1 und US2011272991A1 offenbaren gattungsgemäße Flugzeugsitzvorrichtungen.

Die Aufgabe der Erfindung besteht insbesondere darin, eine gattungsgemäße Vorrichtung mit verbesserten Eigenschaften hinsichtlich einer Herstellung und/oder eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einem Sitzteiler, mit einer Armlehne, die zwischen einer Gebrauchsstellung und einer Nichtgebrauchsstellung zu dem Sitzteiler verschwenkbar ist und die einen Armlehnengrundkörper aufweist, und mit einem Anbindungsmodul, das dazu vorgesehen ist, die Armlehne schwenkbar zu dem Sitzteiler zu lagern, wobei der Armlehnengrundkörper in einem vollständig montierten Zustand über das Anbindungsmodul mit dem Sitzteiler gekoppelt ist.

Es wird erfindungsgemäß vorgeschlagen, dass das Anbindungsmodul schwenkbar mit dem Sitzteiler verbunden ist und in einem Montagezustand, in dem das Anbindungsmodul mit dem Sitzteiler verbunden ist, zu einer Kopplung mit dem Armlehnengrundkörper vorgesehen ist, wobei das Anbindungsmodul in dem vollständig montierten Zustand zumindest im Wesentlichen in einem Anbindungsraum der Armlehne aufgenommen ist, wobei das Anbindungsmodul in dem Anbindungsraum der Armlehne von seitlichen Wandungen des Armlehnengrundkörpers begrenzt und zumindest zu einem Großteil verdeckt ist und wobei das Anbindungsmodul zumindest eine Kulissenführung aufweist, in der zumindest ein Anschlagelement des Sitzteilers angeordnet ist und die einen ersten Endanschlag für die Gebrauchsstellung und einen zweiten Endanschlag für die Nichtgebrauchsstellung ausbildet. Durch die erfindungsgemäße Ausgestaltung kann eine vorteilhaft effiziente Herstellung der Flugzeugsitzvorrichtung erfolgen. Durch die erfindungsgemäße Ausgestaltung kann eine vorteilhaft einfache Montage und Demontage der Armlehne an dem Sitzteiler erfolgen. Des Weiteren kann durch die erfindungsgemäße Ausgestaltung ein vorteilhaft einfach montierbares Anbindungsmodul bereitgestellt werden. Ferner kann durch die erfindungsgemäße Ausgestaltung ein vorteilhaft schneller und einfacher Austausch der Armlehne erfolgen.

Vorzugsweise ist die Flugzeugsitzvorrichtung Teil eines Flugzeugsitzes und/oder einer, insbesondere zusammenhängenden, Flugzeugsitzreihe aus zumindest zwei Flugzeugsitzen. Vorzugsweise umfasst die Flugzeugsitzvorrichtung eine Aufständereinheit, über die die Flugzeugsitzvorrichtung, insbesondere der zumindest eine Flugzeugsitz, auf einer Aufständerebene aufgeständert werden kann. Vorzugsweise ist der Sitzteiler mit der Aufständereinheit verbunden.

Vorzugsweise ist die Armlehne in dem vollständig montierten Zustand vollständig an dem Sitzteiler montiert und insbesondere durch einen Passagier nutzbar. Vorzugsweise ist der Armlehnengrundkörper in dem vollständig montierten Zustand über das Anbindungsmodul mit dem Sitzteiler verbunden. Vorzugsweise ist der Armlehnengrundkörper dazu vorgesehen, auf die Armlehne wirkende Abstützkräfte, insbesondere durch Auflage eines Arms eines Passagiers, in den Sitzteiler abzuleiten. Unter einer "Gebrauchsstellung" soll vorzugsweise eine Stellung der Armlehne verstanden werden, bei der eine Haupterstreckungsachse der Armlehne zumindest im Wesentlichen parallel zu einer Haupterstreckungsebene eines Sitzbodens des Flugzeugsitzes ausgerichtet ist. Vorzugsweise kann ein Passagier seinen Arm, insbesondere in einer aufrechten Sitzhaltung auf dem Flugzeugsitz, in der Gebrauchsstellung auf der Armlehne ablegen. Unter einer "Nichtgebrauchsstellung" soll vorzugsweise eine Stellung der Armlehne verstanden werden, bei der die Haupterstreckungsachse der Armlehne zumindest im Wesentlichen parallel zu einer Haupterstreckungsebene einer Rückenlehne des Flugzeugsitzes ausgerichtet ist. Vorzugsweise kann der Passagier seinen Arm, insbesondere in einer aufrechten Sitzhaltung auf dem Flugzeugsitz, in der Nichtgebrauchsstellung nicht auf der Armlehne ablegen. Vorzugsweise ist die Armlehne in der Nichtgebrauchsstellung, insbesondere maximal, zu der Gebrauchsstellung verschwenkt.

Vorzugsweise ist das Anbindungsmodul als eine Montageschnittstelle für die Armlehne ausgebildet. Vorzugsweise ist das Anbindungsmodul modular ausgebildet. Vorzugsweise ist das Anbindungsmodul dazu vorgesehen, dass unterschiedlich ausgestaltete Armlehnen mit dem Anbindungsmodul koppelbar sind. Unter "vorgesehen" soll vorzugsweise speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise ist der Anbindungsraum zur Aufnahme des Anbindungsmoduls in der Armlehne vorgesehen. Vorzugsweise bildet der Armlehnengrundkörper den Anbindungsraum aus. Vorzugsweise ist der Anbindungsraum, insbesondere in einer Seitenansicht der Flugzeugsitzvorrichtung betrachtet, durch eine Außenkontur des Armlehnengrundkörpers begrenzt. Unter einer "Außenkontur" soll vorzugsweise eine äußerste Kontur des Armlehnengrundkörpers verstanden werden, insbesondere unabhängig von einer Betrachtungsrichtung zu dem Armlehnengrundkörper. Unter einer "Seitenansicht der Flugzeugsitzvorrichtung" soll vorzugsweise eine Ansicht in einer Richtung orthogonal zu einer Längsachse der Armlehne und parallel zu der Aufständerebene verstanden werden. Vorzugsweise entspricht die Seitenansicht einer Blickrichtung entlang der Schwenkachse der Armlehne. Unter "zumindest im Wesentlichen in einem Anbindungsraum der Armlehne aufgenommen" soll vorzugsweise verstanden werden, dass das Anbindungsmodul, insbesondere in einer Seitenansicht der Flugzeugsitzvorrichtung, insbesondere mindestens zu 75 %, vorzugsweise mindestens zu 90 % und besonders bevorzugt mindestens zu 95 % in dem Anbindungsraum angeordnet ist. Vorzugsweise ragt das Anbindungsmodul in dem vollständig montierten Zustand nicht über die Außenkontur des Armlehnengrundkörpers hinaus. Vorzugsweise ist das Anbindungsmodul in dem vollständig montierten Zustand vollständig in dem Anbindungsraum der Armlehne angeordnet. Grundsätzlich soll unter "zumindest im Wesentlichen" verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt.

Des Weiteren wird vorgeschlagen, dass der Armlehnengrundkörper an dem Anbindungsmodul in einem Montagezustand, in dem das Anbindungsmodul mit dem Sitzteiler verbunden ist, montierbar ist. Durch diese Ausgestaltung kann eine vorteilhaft einfache und schnelle Kopplung der Armlehne mit dem Anbindungsmodul erfolgen. Dadurch kann die Armlehne vorteilhaft einfach an dem Sitzteiler montiert werden. Unter "montierbar" soll vorzugsweise sowohl verstanden werden, dass die Armlehne mit dem Anbindungsmodul koppelbar ist, als auch, dass die Armlehne, insbesondere zerstörungsfrei, von dem Anbindungsmodul entkoppelbar ist. Vorzugsweise ist der Armlehnengrundkörper in dem Montagezustand, in dem das Anbindungsmodul mit dem Sitzteiler verbunden ist, abnehmbar von dem Anbindungsmodul ausgebildet. Vorzugsweise ist die Armlehne, insbesondere der Armlehnengrundkörper, dazu vorgesehen, auf das Anbindungsmodul aufgeschoben zu werden, insbesondere in dem Montagezustand, in dem das Anbindungsmodul mit dem Sitzteiler verbunden ist.

Ferner wird vorgeschlagen, dass der Armlehnengrundkörper mittels zumindest eines Befestigungsmittels mit dem Anbindungsmodul verbunden ist, wobei das zumindest eine Befestigungsmittel in dem vollständig montierten Zustand durch ein Armauflageelement der Armlehne verdeckt ist. Durch diese Ausgestaltung kann eine vorteilhaft sichere Verbindung des Armlehnengrundkörpers an das Anbindungsmodul erreicht werden. Des Weiteren kann dadurch vermieden werden, dass Befestigungsmittel für einen Passagier sichtbar und/oder zugänglich sind. Vorzugsweise ist das Armauflageelement in der Gebrauchsstellung zu einem direkten Kontakt mit einem Arm des Passagiers vorgesehen. Vorzugsweise ist das Armauflageelement als ein Komfortelement ausgebildet. Vorzugsweise ist der Armlehnengrundkörper, insbesondere in dem vollständig montierten Zustand, kraftschlüssig und/oder formschlüssig mit dem Anbindungsmodul verbunden. Vorzugsweise ist der Armlehnengrundkörper über das zumindest eine Befestigungsmittel in einem Montagezustand verbindbar, in dem das Armauflageelement nicht mit dem Armlehnengrundköper gekoppelt ist. Alternativ ist es denkbar, dass der Armlehnengrundkörper mittels zumindest einer Rastverbindung mit dem Anbindungsmodul verbindbar ist.

Zudem wird erfindungsgemäß vorgeschlagen, dass das Anbindungsmodul in dem Anbindungsraum der Armlehne von seitlichen Wandungen des Armlehnengrundkörpers begrenzt und zumindest zu einem Großteil verdeckt ist. Durch diese Ausgestaltung kann eine vorteilhaft einfache und stabile Lagerung des Anbindungsmoduls in dem Armlehnengrundkörper erreicht werden. Des Weiteren kann durch diese Ausgestaltung erreicht werden, dass das Anbindungsmodul für einen Passagier zumindest im Wesentlichen nicht sichtbar ist. Vorzugsweise begrenzen die seitlichen Wandungen des Armlehnengrundkörpers den Anbindungsraum zu mindestens zwei Seiten. Vorzugsweise liegt das Anbindungsmodul in dem vollständig montierten Zustand, insbesondere in dem Anbindungsraum, an den seitlichen Wandungen des Armlehnengrundkörpers an. Vorzugsweise ist das Anbindungsmodul in dem vollständig montierten Zustand, insbesondere in einer Seitenansicht der Flugzeugsitzvorrichtung betrachtet, zumindest zu einem Großteil von dem Armlehnengrundkörper verdeckt. Unter "zumindest zu einem Großteil" soll bevorzugt zumindest 60 %, vorzugsweise zumindest 75 %, besonders bevorzugt zumindest 90 % und ganz besonders bevorzugt zumindest 95 % eines Volumens des Anbindungsmoduls verstanden werden.

Des Weiteren wird vorgeschlagen, dass die Armlehne in einem Anbindungsbereich der Armlehne seitliche Außenflächen aufweist, die vollständig geschlossen und von dem Armlehnengrundkörper ausgebildet sind. Durch diese Ausgestaltung kann eine vorteilhaft geschlossene Oberfläche des Armlehnengrundkörpers bereitgestellt werden. Dadurch kann eine vorteilhaft einfache Herstellung erfolgen. Des Weiteren ermöglicht diese Ausgestaltung eine vorteilhaft einfache Reinigung der Armlehne. Des Weiteren kann durch diese Ausgestaltung auf zusätzliche Abdeckelemente vorteilhaft verzichtet werden. Vorzugsweise bilden die seitlichen Wandungen des Armlehnengrundkörpers die seitlichen Außenflächen aus. Unter einem "Anbindungsbereich der Armlehne" soll vorzugsweise ein Bereich, insbesondere in einer Seitenansicht der Flugzeugsitzvorrichtung betrachtet, verstanden werden, in dem sich der Armlehnengrundkörper und das Anbindungsmodul in dem vollständig montierten Zustand überlappen. Unter "vollständig geschlossen" soll vorzugsweise verstanden werden, dass die seitlichen Außenflächen ohne Unterbrechung einer stetigen Oberfläche ausgebildet sind, wobei die seitlichen Außenflächen insbesondere nicht durch Aussparungen und/oder Absätze unterbrochen sind. Vorzugsweise ist die Armlehne, insbesondere der Armlehnengrundkörper, in dem Anbindungsbereich der Armlehne frei von zumindest einem seitlich angeordneten Abdeckelement. Unter einem "Abdeckelement" soll vorzugsweise ein separates Bauteil verstanden werden, das zusätzlich zu einer, insbesondere seitlichen, Abdeckung der Armlehne mit der Armlehne, insbesondere mit dem Armlehnengrundkörper, verbunden ist. Ferner wird vorgeschlagen, dass das Anbindungsmodul zumindest einen Anbindungsgrundkörper aufweist, der in dem vollständig montierten Zustand zumindest im Wesentlichen in dem Armlehnengrundkörper aufgenommen ist. Durch diese Ausgestaltung kann das Anbindungsmodul besonders vorteilhaft für eine Montage der Armlehne ausgebildet werden. Vorzugsweise ist der zumindest eine Anbindungsgrundkörper in dem vollständig montierten Zustand kraftschlüssig und/oder formschlüssig mit dem Armlehnengrundkörper verbunden. Vorzugsweise ist der Armlehnengrundkörper mittels des zumindest einen Befestigungsmittels mit dem zumindest einen Anbindungsgrundkörper verbunden. Vorzugsweise ist der zumindest eine Anbindungsgrundkörper in dem vollständig montierten Zustand zumindest im Wesentlichen in dem Anbindungsraum der Armlehne aufgenommen. Vorzugsweise ist der zumindest eine Anbindungsgrundkörper plattenförmig ausgebildet.

Zudem wird vorgeschlagen, dass das Anbindungsmodul eine Schwenklagereinheit aufweist, die mit dem zumindest einen Anbindungsgrundkörper verbunden ist und über die das Anbindungsmodul schwenkbar an dem Sitzteiler gelagert ist. Durch diese Ausgestaltung kann das Anbindungsmodul vorteilhaft an dem Sitzteiler gelagert werden. Des Weiteren kann durch diese Ausgestaltung eine vorteilhaft einfache Montage des Anbindungsmoduls an dem Sitzteiler ermöglicht werden. Vorzugsweise ist das Anbindungsmodul in einem Winkelbereich zwischen der Gebrauchsstellung und der Nichtgebrauchsstellung schwenkbar zu dem Sitzteiler gelagert. Vorzugsweise weist der Sitzteiler ein Schwenklager auf. Vorzugsweise ist die Schwenklagereinheit des Anbindungsmoduls mit dem Schwenklager des Sitzteilers verbunden. Vorzugsweise greift die Schwenklagereinheit des Anbindungsmoduls formschlüssig und/oder kraftschlüssig in das Schwenklager des Sitzteilers ein. Vorzugsweise ist die Schwenklagereinheit dazu vorgesehen, in den Sitzteiler eingeschoben und formschlüssig in dem Sitzteiler gesichert zu werden.

Des Weiteren wird erfindungsgemäß vorgeschlagen, dass das Anbindungsmodul zumindest eine Kulissenführung aufweist, in der zumindest ein Anschlagelement des Sitzteilers angeordnet ist und die einen ersten Endanschlag für die Gebrauchsstellung und einen zweiten Endanschlag für die Nichtgebrauchsstellung ausbildet. Durch diese Ausgestaltung kann eine Schwenkkinematik der Flugzeugsitzvorrichtung vorteilhaft in das Anbindungsmodul intergiert werden. Dadurch kann eine vorteilhaft einfach ausgebildete und einfach zu montierende Armlehne bereitgestellt werden. Vorzugsweise ist das Anschlagelement als ein Bolzen ausgebildet. Vorzugsweise ist die Kulissenführung entlang eines Kreisbogenabschnitts um eine Schwenkachse der Armlehne angeordnet.

Ferner wird vorgeschlagen, dass die zumindest eine Kulissenführung in dem zumindest einen Anbindungsgrundkörper angeordnet ist. Durch diese Ausgestaltung kann eine vorteilhaft stabile Anbindung der Armlehne an den Sitzteiler erreicht werden. Vorzugsweise ist die Kulissenführung als eine Nut ausgebildet, die den zumindest einen Anbindungsgrundkörper durchbricht.

Zudem wird vorgeschlagen, dass der Armlehnengrundkörper einteilig, insbesondere integral, ausgebildet ist. Durch diese Ausgestaltung kann eine vorteilhaft einfache und kostengünstige Herstellung der Flugzeugsitzvorrichtung erreicht werden. Des Weiteren kann dadurch eine schnelle und übersichtliche Montage der Flugzeugsitzvorrichtung erreicht werden. Unter "einteilig" soll vorzugsweise in einem Stück geformt verstanden werden. Vorzugsweise wird dieses eine Stück aus einem einzelnen Rohling, einer Masse und/oder einem Guss, besonders bevorzugt in einem Spritzgussverfahren hergestellt.

Des Weiteren wird vorgeschlagen, dass ein Innenraum der Armlehne zwischen dem Armlehnengrundkörper und dem Armauflageelement frei von einer zusätzlichen Abstützstruktur ist. Durch diese Ausgestaltung kann eine vorteilhaft einfache Herstellung und Montage der Armlehne erfolgen. Des Weiteren kann eine vorteilhaft gewichtsoptimierte Armlehne bereitgestellt werden. Ferner kann durch diese Ausgestaltung eine besonders vorteilhafte Verlegung von zumindest einem Kabel, welches insbesondere als ein Bowdenzug ausgebildet ist, in einem Inneren der Armlehne erfolgen. Unter einem "Innenraum der Armlehne" soll vorzugsweise ein Raum verstanden werden, der von der Armlehne selbst zu einer Umgebung hin begrenzt ist. Vorzugsweise ist der Innenraum der Armlehne von dem Armlehnengrundkörper und von dem Armauflageelement begrenzt. Unter einer "Abstützstruktur" soll vorzugsweise eine Bauteilstruktur, insbesondere ein Bauteil, verstanden werden, das primär zu einem Transfer von Kräften und/oder Drehmomenten vorgesehen ist, die aus einer Abstützung des Passagiers auf die Armlehne resultieren. Vorzugsweise ist der Armlehnengrundkörper als eine Abstützstruktur ausgebildet, die dazu vorgesehen ist, in die Armlehne eingeleitete Abstützkräfte in den Sitzteiler abzuleiten. Vorzugsweise ist der Armlehnengrundkörper über einen Großteil einer Längserstreckung des Armlehnengrundkörpers U-förmig ausgebildet. Vorzugsweise weist die Armlehne in dem Innenraum der Armlehne, in dem der Armlehnengrundkörper insbesondere U-förmig ausgebildet ist, einen durchgängig hindernisfreien Hohlraum entlang der Längserstreckung des Armlehnengrundkörpers auf, der insbesondere frei von zumindest einer Verstärkungsrippe ist. Vorzugsweise trägt der Armlehnengrundkörper in einem Bereich, in dem der Armlehnengrundkörper U-förmig ausgebildet ist, bevorzugt zumindest 75 %, vorzugsweise zumindest 80 % und besonders bevorzugt zumindest 90 % der in die Armlehne eingeleiteten Abstützkräfte zu dem Sitzteiler ab.

Ferner wird vorgeschlagen, dass der Armlehnengrundkörper zumindest im Wesentlichen aus einem faserverstärkten Kunststoff gebildet ist. Durch diese Ausgestaltung kann eine vorteilhaft gewichtsoptimierte Armlehne bereitgestellt werden. Vorzugsweise umfasst der faserverstärkte Kunststoff zumindest eine, vorzugsweise eine Vielzahl, von Verstärkungsfasern. Vorzugsweise sind die Verstärkungsfasern als Kohlenstofffasern, Glasfasern und/oder Aramidfasern ausgebildet. Grundsätzlich könnten die Verstärkungsfasern auch aus einem anderen, dem Fachmann für geeignet erscheinenden Fasermaterial ausgebildet sein. Vorzugsweise sind die Verstärkungsfasern in zumindest einem Roving gebündelt.

Zudem wird vorgeschlagen, dass der Armlehnengrundkörper eine Kunststoffmatrix und zumindest einen in die Kunststoffmatrix eingebetteten Vorformling aufweist, der insbesondere mittels eines Tailored-Fiber-Placement-Prozesses hergestellt ist. Durch diese Ausgestaltung kann ein vorteilhaft kraftflussoptimierter Armlehnengrundkörper bereitgestellt werden. Dadurch kann eine vorteilhaft gewichtsoptimierte Armlehne bereitgestellt werden. Des Weiteren kann durch diese Ausgestaltung eine vorteilhaft kostengünstige und reproduzierbare Herstellung erfolgen. Vorzugsweise ist die Kunststoffmatrix als ein duroplastischer Kunststoff ausgebildet. Vorzugsweise ist die Kunststoffmatrix aus einem Kunstharz, insbesondere einem Epoxidharz, gebildet. Unter einem "Vorformling" soll vorzugsweise ein Halbfabrikat verstanden werden, welches mehrere Verstärkungsfasern, insbesondere zumindest einen Roving, aufweist. Unter einem "Tailored-Fiber-Placement-Prozess" soll vorzugsweise ein Herstellungsverfahren verstanden werden, bei dem die Verstärkungsfasern, insbesondere der zumindest eine Roving, entlang von Lastpfaden eines Bauteils, insbesondere des Armlehnengrundkörpers, abgelegt und fixiert werden. Vorzugsweise ist der zumindest eine Vorformling dazu vorgesehen, zweidimensional gefertigt zu werden. Vorzugsweise umfasst der zumindest eine Vorformling zumindest einen Stickgrund und eine Vielzahl von Verstärkungsfasern, die insbesondere in einem Roving gebündelt sind. Vorzugsweise ist der Roving auf dem zumindest einen Stickgrund mittels zumindest eines Stickfadens des Vorformlings fixiert. Vorzugsweise ist der Roving entlang von Lastpfaden des Armlehnengrundkörpers in Bahnen auf dem Stickgrund angeordnet. Alternativ wäre es denkbar, dass der Vorformling zumindest ein Fasergelege und/oder zumindest ein Fasergewebe umfasst. Unter "eingebettet" soll vorzugsweise verstanden werden, dass der Vorformling mittels der Kunststoffmatrix imprägniert und zumindest im Wesentlichen vollständig von der Kunststoffmatrix benetzt ist. Alternativ kann der zumindest eine Vorformling auch mittels eines Webprozesses und/oder eines Flechtprozesses hergestellt sein.

Des Weiteren wird vorgeschlagen, dass der Armlehnengrundkörper mittels eines Resin-Transfer-Molding-Prozesses hergestellt ist, wobei der Vorformling dazu vorgesehen ist, während des Resin-Transfer-Molding-Prozesses in die Kunststoffmatrix eingebettet zu werden. Durch diese Ausgestaltung kann der Armlehnengrundkörper vorteilhaft reproduzierbar hergestellt werden. Des Weiteren kann durch diese Ausgestaltung eine besonders vorteilhafte Oberfläche des Armlehnengrundkörpers geschaffen werden. Vorzugsweise umfasst ein Verfahren zur Herstellung des Armlehnengrundkörpers einen Verfahrensschritt, in dem der zumindest eine Vorformling mittels des Tailored-Fiber-Placement-Prozesses hergestellt wird. Vorzugsweise umfasst das Verfahren zur Herstellung des Armlehnengrundkörpers einen weiteren Verfahrensschritt, der auf den Verfahrensschritt folgt und in dem der zumindest eine Vorformling mittels des Resin-Transfer-Molding-Prozesses in die Kunststoffmatrix eingebettet wird. Vorzugsweise ist der Vorformling dazu vorgesehen, während eines Drapierprozesses oder während des Resin-Transfer-Molding-Prozesses umgeformt zu werden. Unter einem "Resin-Transfer-Molding-Prozess" soll vorzugsweise ein Herstellungsverfahren verstanden werden, bei dem der zumindest eine Vorformling in zumindest ein Formwerkzeug eingelegt ist, in das die Kunststoffmatrix, insbesondere ein Harz-Härter-Gemisch, unter einem Injektionsdruck injiziert wird, wobei der zumindest eine Vorformling von der Kunststoffmatrix durchtränkt wird. Vorzugsweise kann ein Rohkörper des Armlehnengrundkörpers nach einem Aushärten aus dem zumindest einen Formwerkzeug entnommen werden. Vorzugsweise ist der Rohkörper des Armlehnengrundkörpers dazu vorgesehen, lackiert zu werden. Vorzugsweise weist der Armlehnengrundkörper eine, insbesondere außenliegende, Lackierung auf. Alternativ wäre es jedoch auch denkbar, dass der Armlehnengrundkörper frei von einer, insbesondere außenliegenden, Lackierung ist. Vorzugsweise ist der Armlehnengrundkörper als ein Sichtbauteil ausgebildet. Grundsätzlich wäre es auch denkbar, dass eine Folierung stoffschlüssig mit dem Rohkörper des Armlehnengrundkörpers verbunden ist, beispielsweise mittels eines Tiefziehprozesses, bei dem eine Folie auf den Armlehnengrundkörper aufgebracht wird. Grundsätzlich ist es auch denkbar, dass eine Folierung und/oder eine Beschichtung des Armlehnengrundkörpers, insbesondere alternativ zu einer Lackierung des Rohkörpers des Armlehnengrundkörpers, während eines formgebenden Verfahrens des Armlehnengrundkörpers auf den Armlehnengrundkörper aufgebracht wird, insbesondere bei einem In-Mould-Coating-Prozess. Vorzugsweise ist der Armlehnengrundkörper frei von einem, insbesondere zerstörungsfrei, entfernbaren Abdeckelement und/oder einer, insbesondere zerstörungsfrei, entfernbaren Folierung. Vorzugsweise ist ein Austausch einer, insbesondere außenliegenden, Oberfläche des Armlehnengrundkörpers nicht möglich, ohne den Armlehnengrundkörper zu beschädigen und/oder den Armlehnengrundkörper vollständig zu tauschen. Grundsätzlich wäre es auch vorstellbar, dass der Armlehnengrundkörper mittels eines Vakuum-Infiltrations-Prozesses hergestellt ist, wobei der Vorformling dazu vorgesehen ist, während des Vakuum-Infiltrations-Prozesses in die Kunststoffmatrix eingebettet zu werden. Alternativ wäre es auch denkbar, dass der Armlehnengrundkörper mittels eines Nasspress-Prozesses hergestellt ist, wobei der Vorformling dazu vorgesehen ist, während des Nasspress-Prozesses in die Kunststoffmatrix eingebettet zu werden. Grundsätzlich wäre es auch denkbar, dass die Kunststoffmatrix als ein thermoplastischer Kunststoff ausgebildet ist.

Ferner wird vorgeschlagen, dass die Armlehne über zwei parallel zueinander ausgerichtete und voneinander beabstandete Schwenkachsen verschwenkbar ist. Durch diese Ausgestaltung kann eine vorteilhaft große Verschwenkung der Armlehne erreicht werden. Ferner kann durch diese Ausgestaltung erreicht werden, dass die Armlehne bei einer Verschwenkung einer zu der Armlehne benachbarten Rückenlehne vorteilhaft aus einem Rückenabstützbereich verschwenkt werden kann. Vorzugsweise weist die Armlehne eine Schwenkachse und eine weitere Schwenkachse auf. Vorzugsweise ist die Schwenkachse durch das Schwenklager des Sitzteilers ausgebildet, welches mit der Schwenklagereinheit des Anbindungsmoduls gekoppelt ist. Vorzugsweise ist die weitere Schwenkachse durch ein weiteres Schwenklager des Sitzteilers ausgebildet. Vorzugsweise ist der Sitzteiler mehrteilig ausgebildet. Vorzugsweise weist der Sitzteiler ein Schwenkträgerelement auf. Vorzugsweise ist das Schwenkträgerelement zumindest zu einem Großteil zwischen der Schwenkachse und der weiteren Schwenkachse angeordnet. Vorzugsweise ist das Schwenkträgerelement dazu vorgesehen, das Schwenklager des Sitzteilers, insbesondere die Schwenkachse, relativ zu der weiteren Schwenkachse zu verschwenken. Vorzugsweise ist das Schwenklager des Sitzteilers direkt mit dem Schwenkträgerelement verbunden. Vorzugsweise ist das Anbindungsmodul mit dem Schwenkträgerelement schwenkbar verbunden. Vorzugsweise ist das Schwenkträgerelement über die weitere Schwenkachse, insbesondere zu der Aufständereinheit, verschwenkbar.

Zudem wird vorgeschlagen, dass die Armlehne um mindestens 110 Grad, insbesondere um mindestens 120 Grad, von der Gebrauchsstellung in die Nichtgebrauchsstellung und/oder eine weitere Nichtgebrauchsstellung verschwenkbar ist. Durch diese Ausgestaltung kann eine vorteilhaft große Verschwenkung der Armlehne erreicht werden. Ferner kann durch diese Ausgestaltung erreicht werden, dass die Armlehne bei einer Verschwenkung einer zu der Armlehne benachbarten Rückenlehne vorteilhaft aus einem Rückenabstützbereich verschwenkt werden kann. Vorzugsweise ist die Armlehne um bis zu 128 Grad von der Gebrauchsstellung in die weitere Nichtgebrauchsstellung verschwenkbar. Unter einer "weiteren Nichtgebrauchsstellung" soll vorzugsweise eine Nichtgebrauchsstellung verstanden werden, bei der das Schwenkträgerelement relativ zu der Gebrauchsstellung der Armlehne nach hinten verschwenkt ist. Vorzugsweise ist das Schwenkträgerelement in der Nichtgebrauchsstellung und in der Gebrauchsstellung in einer selben Stellung angeordnet. Vorzugsweise ist das Schwenkträgerelement in der weiteren Nichtgebrauchsstellung verschwenkt zu dieser selben Stellung angeordnet. Vorzugsweise ist die Armlehne dazu vorgesehen, zuerst über die Schwenkachse von der Gebrauchsstellung in die Nichtgebrauchsstellung verschwenkt zu werden. Vorzugsweise ist die Armlehne danach dazu vorgesehen, mittels des Schwenkträgerelements über die weitere Schwenkachse von der Nichtgebrauchsstellung in die weitere Nichtgebrauchsstellung verschwenkt zu werden.

Des Weiteren wird vorgeschlagen, dass ein Abstand der Schwenkachse der Armlehne zu einer Unterseite des Armlehnengrundkörpers, insbesondere in der Gebrauchsstellung, kleiner ist als ein Abstand der Schwenkachse der Armlehne zu einer Oberseite des Armauflageelements. Durch diese Ausgestaltung kann eine besonders vorteilhafte Verschwenkung der Armlehne zu dem Sitzteiler erfolgen. Durch diese Ausgestaltung kann die Armlehne besonders vorteilhaft um das Schwenklager des Sitzteilers verschwenkt werden. Dadurch kann die Armlehne bei einer Verschwenkung von der Gebrauchsstellung in die Nichtgebrauchsstellung vorteilhaft weit aus einem Rückenabstützbereich bewegt werden. Unter einer "Unterseite des Armlehnengrundkörpers" soll vorzugsweise ein Punkt oder ein Bereich des Armlehnengrundkörpers verstanden werden, welcher, insbesondere in der Gebrauchsstellung der Armlehne, einen geringsten Abstand zu der Aufständerebene aufweist. Unter einer "Oberseite des Armauflageelements" soll vorzugsweise ein Punkt oder Bereich des Armauflageelements verstanden werden, welcher in der Gebrauchsstellung der Armlehne einen maximalen Abstand zu der Aufständerebene aufweist.

Ferner wird vorgeschlagen, dass die Flugzeugsitzvorrichtung zumindest einen Kabelkanal umfasst, welcher ausgehend von dem Armlehnengrundkörper durch das Anbindungsmodul in den Sitzteiler verläuft. Durch diese Ausgestaltung kann ein durch die Armlehne geführtes Kabel vorteilhaft einfach in die Flugzeugsitzvorrichtung integriert werden. Des Weiteren kann durch diese Ausgestaltung eine vorteilhaft einfache und definierte Montage von Kabeln erfolgen. Vorzugsweise ist der zumindest eine Kabelkanal in zumindest einem Abschnitt durch den Sitzteiler geführt. Vorzugsweise ist der zumindest eine Kabelkanal in dem zumindest einen Abschnitt von einer Rückseite des Sitzteilers auf eine Vorderseite des Sitzteilers geführt. Vorzugsweise ist der zumindest eine Kabelkanal dazu vorgesehen, zumindest ein Kabel aufzunehmen. Vorzugsweise ist das zumindest eine Kabel als ein Bowdenzug oder als eine elektrische Leitung ausgebildet. Vorzugsweise ist das zumindest eine Kabel dazu vorgesehen, wenigstens ein mechanisches und/oder elektronisches Betätigungs- und/oder Bediensignal zu transferieren, beispielsweise zur Verstellung einer Rückenlehne und/oder einer Beinstütze und/oder zur Bedienung eines In-Flight-Entertainment-Systems. Vorzugsweise weist die Armlehne zumindest ein Betätigungs- und/oder Bedienelement auf. Vorzugsweise ist das zumindest eine Betätigungs- und/oder Bedienelement mit dem zumindest einen Kabel funktional gekoppelt. Vorzugsweise ist das zumindest einen Betätigungs- und/oder Bedienelement an dem Armlehnengrundkörper befestigt.

Zudem wird vorgeschlagen, dass die Flugzeugsitzvorrichtung eine Einbuchtung aufweist, die in der Gebrauchsstellung direkt an einer Vorderseite des Sitzteilers unterhalb des Armlehnengrundkörpers angeordnet ist. Durch diese Ausgestaltung kann ein Einklemmen eines Fingers vorteilhaft vermieden werden, insbesondere wenn die Armlehne von der Nichtgebrauchsstellung in die Gebrauchsstellung verschwenkt wird. Durch diese Ausgestaltung kann ein Fingerpinching vorteilhaft vermieden werden, ohne dass ein zusätzliches Abdeckteil direkt an der Vorderseite des Sitzteilers unterhalb des Armlehnengrundkörpers vorgesehen werden muss. Unter "unterhalb des Armlehnengrundkörpers angeordnet" soll in diesem Zusammenhang vorzugsweise verstanden werden, dass die Einbuchtung an einer Stelle des Armlehnengrundkörpers direkt vor der Vorderseite des Sitzteilers angeordnet ist, wobei die Einbuchtung an dieser Stelle direkt unterhalb des Armlehnengrundkörpers angeordnet ist. Vorzugsweise ist die Einbuchtung, insbesondere in der Gebrauchsstellung der Armlehne, in einer Seitenansicht der Flugzeugsitzvorrichtung betrachtet durch den Armlehnengrundkörper verdeckt.

Des Weiteren wird ein Verfahren zur Montage der Flugzeugsitzvorrichtung vorgeschlagen, wobei das Anbindungsmodul in einem Verfahrensschritt mit dem Sitzteiler gekoppelt wird und wobei der Armlehnengrundkörper in einem weiteren Verfahrensschritt, der auf den Verfahrensschritt folgt, mit dem Anbindungsmodul gekoppelt wird. Durch diese Ausgestaltung kann eine Herstellung der Flugzeugsitzvorrichtung vorteilhaft einfach und effizient erfolgen. Des Weiteren kann durch diese Ausgestaltung eine Wartung und/oder ein Austausch der Armlehne vorteilhaft einfach und schnell erfolgen. Vorzugsweise wird das Anbindungsmodul in dem Verfahrensschritt an den Sitzteiler angebunden. Vorzugsweise wird die Schwenklagereinheit des Anbindungsmoduls in dem Verfahrensschritt mit dem Schwenklager des Sitzteilers verbunden. Vorzugsweise wird der zumindest eine Anbindungsgrundkörper in dem Verfahrensschritt mit der Schwenklagereinheit des Anbindungsmoduls, insbesondere drehfest, verbunden. Vorzugsweise ist das Anbindungsmodul nach dem Verfahrensschritt schwenkbar an dem Sitzteiler gelagert. Vorzugsweise ist die Armlehne in dem Verfahrensschritt von dem Anbindungsmodul und dem Sitzteiler getrennt. Vorzugsweise wird die Armlehne in dem weiteren Verfahrensschritt mit dem Anbindungsmodul verbunden. Vorzugsweise wird die Armlehne, insbesondere der Armlehnengrundkörper, in dem weiteren Verfahrensschritt auf das Anbindungsmodul aufgeschoben. Vorzugsweise wird das Anbindungsmodul in dem weiteren Verfahrensschritt in die Armlehne, insbesondere in den Armlehnengrundkörper, eingeschoben. Vorzugsweise ist die Armlehne, insbesondere der Armlehnengrundkörper, nach dem weiteren Verfahrensschritt über das Anbindungsmodul schwenkbar mit dem Sitzteiler verbunden.

Zudem wird ein Verfahren zur Herstellung eines Armlehnen Grundkörpers vorgeschlagen, wobei in einem ersten Verfahrensschritt in einem Tailored-Fiber-Placement-Prozess (TFP-Prozess) ein Vorformling aus einem Stickgrund mit darauf aufgestickten Fasermatten oder Faserbündeln hergestellt wird. Der Stickgrund des Vorformlings ist von einer Fasermatte gebildet, vorzugsweise eine Glasfasermatte. Die auf den Stickgrund aufgestickten Fasermatten oder Faserbündel werden insbesondere in den Bereichen aufgestickt, in denen im Gebrauch des Armlehnengrundkörpers Kräfte übertragen werden. Vorzugsweise ist durch den TFP-Prozess ein Vorformling mit in unterschiedlichen Bereichen unterschiedlichen Wandstärken hergestellt.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Seitenansicht einer erfindungsgemäßen Flugzeugsitzvorrichtung in einer Gebrauchsstellung in einem ersten Ausführungsbeispiel,
- Fig. 2: eine schematische Darstellung einer Armlehne und eines Anbindungsmoduls der erfindungsgemäßen Flugzeugsitzvorrichtung in dem ersten Ausführungsbeispiel,
- Fig. 3: eine schematische Unteransicht der Armlehne in dem ersten Ausführungsbeispiel,
- Fig. 4: eine schematische Rückansicht der Armlehne in dem ersten Ausführungsbeispiel,
- Fig. 5: eine schematische Darstellung eines Anbindungsbereichs der erfindungsgemäßen Flugzeugsitzvorrichtung in dem ersten Ausführungsbeispiel,
- Fig. 6: eine schematische Seitenansicht eines Sitzteilers der erfindungsgemäßen Flugzeugsitzvorrichtung und des Anbindungsmoduls in dem ersten Ausführungsbeispiel,
- Fig. 7: eine schematische Darstellung der erfindungsgemäßen Flugzeugsitzvorrichtung in einer Nichtgebrauchsstellung in dem ersten Ausführungsbeispiel,
- Fig. 8: eine schematische Darstellung eines Vorformlings der erfindungsgemäßen Flugzeugsitzvorrichtung in dem ersten Ausführungsbeispiel,
- Fig. 9: eine schematische Darstellung eines Verfahrens zur Montage der Flugzeugsitzvorrichtung in dem ersten Ausführungsbeispiel, das nicht Teil des beanspruchten Gegenstands ist.
- Fig. 10: eine schematische Schnittdarstellung einer erfindungsgemäßen Flugzeugsitzvorrichtung in einer Gebrauchsstellung in einem zweiten Ausführungsbeispiel und
- Fig. 11: eine schematische Seitenansicht einer erfindungsgemäßen Flugzeugsitzvorrichtung in einer Gebrauchsstellung und in einer Nichtgebrauchsstellung in einem dritten Ausführungsbeispiel.

### Beschreibung der Ausführungsbeispiele

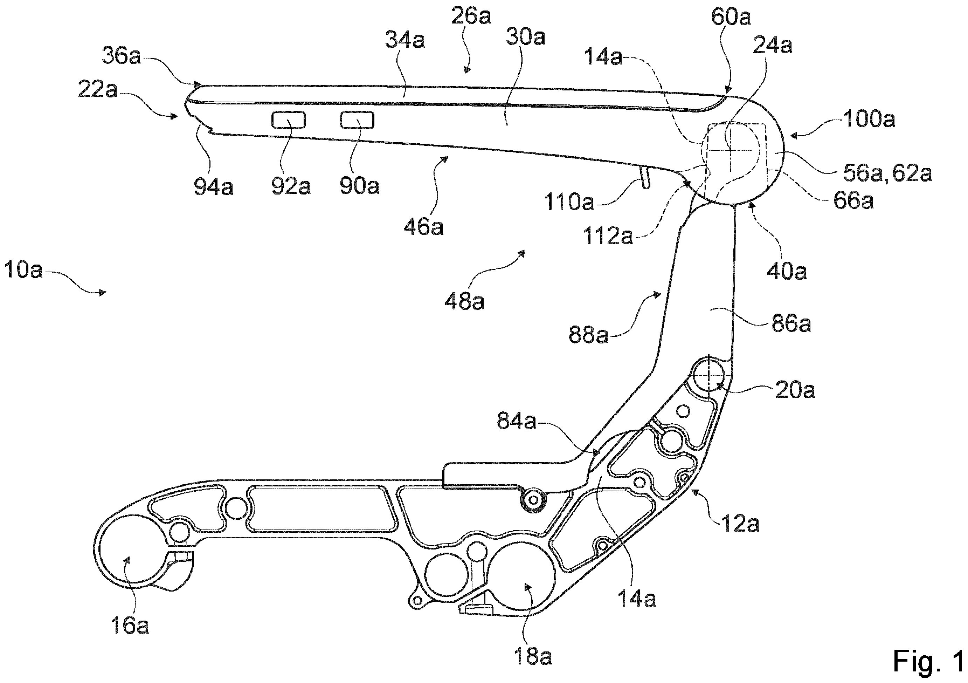

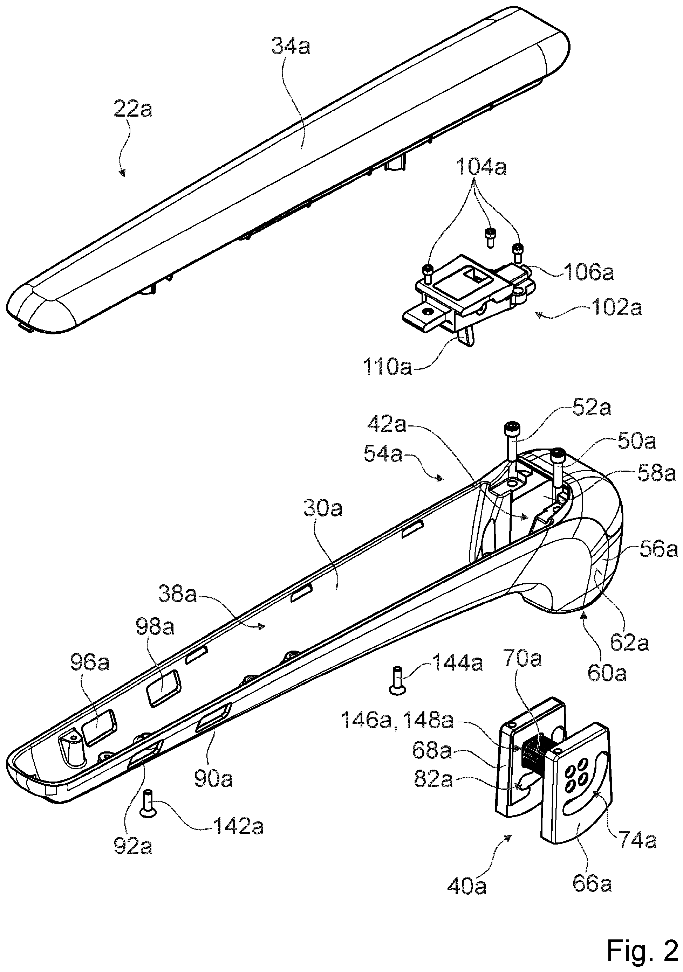

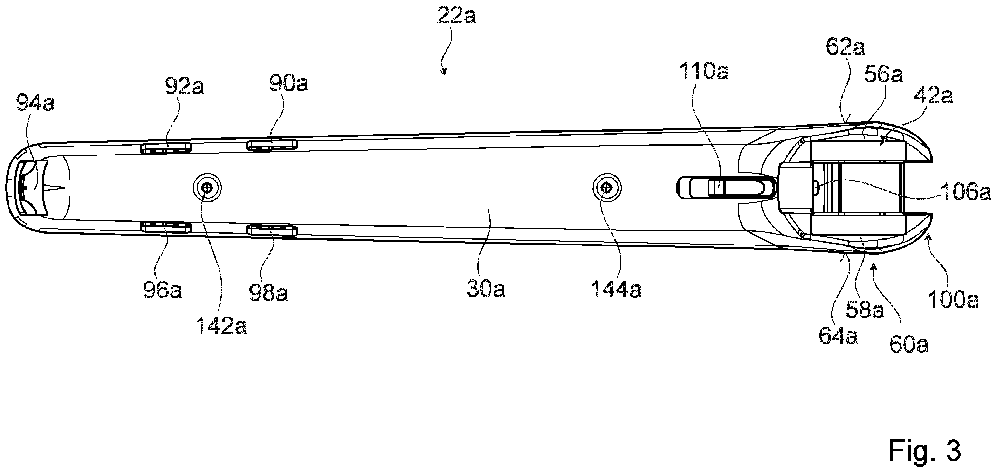

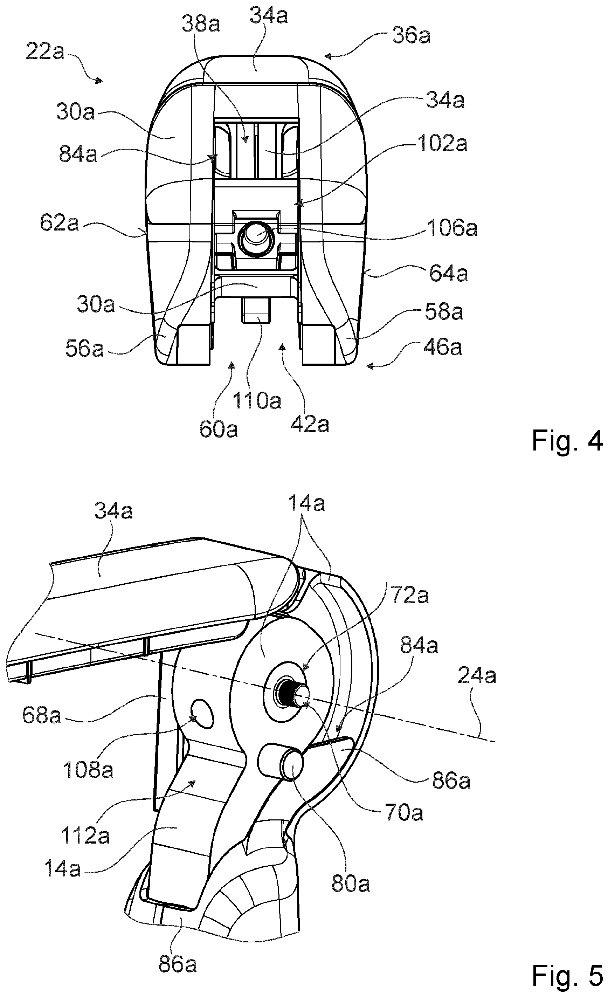

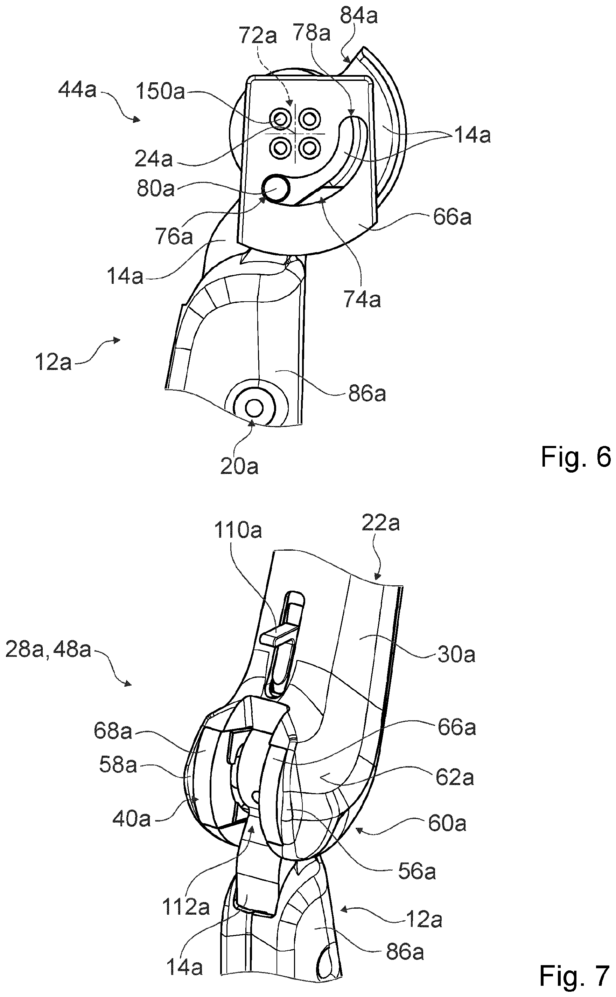

In den Figuren 1 bis 8 ist eine Flugzeugsitzvorrichtung 10a in einem ersten Ausführungsbeispiel gezeigt. Die Flugzeugsitzvorrichtung 10a ist Teil eines nicht näher dargestellten Flugzeugsitzes und/oder einer nicht näher dargestellten Flugzeugsitzreihe aus zumindest zwei Flugzeugsitzen. Die Flugzeugsitzvorrichtung 10a umfasst eine Aufständereinheit, über die die Flugzeugsitzvorrichtung 10a, insbesondere der zumindest eine Flugzeugsitz, auf einer Aufständerebene aufgeständert werden kann.

Die Flugzeugsitzvorrichtung 10a umfasst einen Sitzteiler 12a. Der Sitzteiler 12a ist dazu vorgesehen, seitlich neben einem Sitzboden eines Flugzeugsitzes und/oder zwischen Sitzböden zweier Flugzeugsitze angeordnet zu werden. Der Sitzteiler 12a weist ein Trägerelement 14a auf. Das Trägerelement 14a des Sitzteilers 12a ist einteilig ausgebildet. Der Sitzteiler 12a ist mit der Aufständereinheit verbunden. Der Sitzteiler 12a ist mit nicht näher dargestellten Tragrohren der Aufständereinheit verbunden. Der Sitzteiler 12a weist zumindest zwei Anbindungsstellen 16a, 18a auf, mittels denen der Sitzteiler 12a mit der Aufständereinheit, insbesondere mit zwei Tragrohren der Aufständereinheit, verbunden ist. Der Sitzteiler 12a weist eine Lagerstelle 20a auf, an der eine Rückenlehne eines Flugzeugsitzes, insbesondere schwenkbar, gelagert werden kann.

Die Flugzeugsitzvorrichtung 10a umfasst eine Armlehne 22a. Die Armlehne 22a weist eine Schwenkachse 24a auf. Die Armlehne 22a ist um die Schwenkachse 24a schwenkbar gelagert. Die Armlehne 22a ist zwischen einer Gebrauchsstellung 26a und einer Nichtgebrauchsstellung 28a zu dem Sitzteiler 12a verschwenkbar. Die Armlehne 22a ist in der Nichtgebrauchsstellung 28a maximal zu der Gebrauchsstellung 26a verschwenkt. Das Trägerelement 14a des Sitzteilers 12a erstreckt sich von den Tragrohren der Aufständereinheit bis zu der Armlehne 22a.

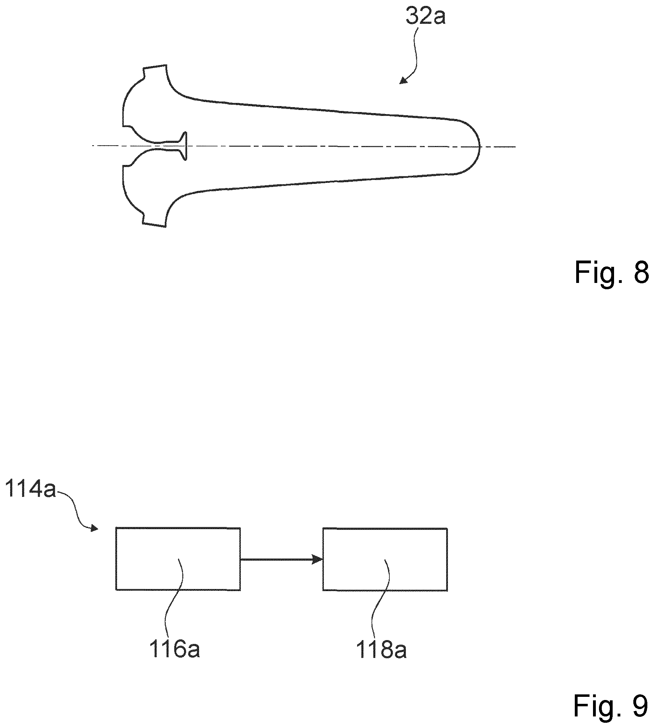

Die Armlehne 22a weist einen Armlehnengrundkörper 30a auf. Der Armlehnengrundkörper 30a ist dazu vorgesehen, auf die Armlehne 22a wirkende Abstützkräfte, insbesondere durch Auflage eines Arms eines Passagiers, in den Sitzteiler 12a abzuleiten. Der Armlehnengrundkörper 30a ist einteilig, insbesondere integral, ausgebildet. Der Armlehnengrundkörper 30a ist zumindest im Wesentlichen aus einem faserverstärkten Kunststoff gebildet. Der faserverstärkte Kunststoff umfasst eine Vielzahl von Verstärkungsfasern. Im vorliegenden Fall sind die Verstärkungsfasern als Kohlenstofffasern ausgebildet. Grundsätzlich können die Verstärkungsfasern jedoch auch als Glasfasern, Aramidfasern oder aus einem anderen, dem Fachmann für geeignet erscheinenden Fasermaterial ausgebildet sein. Die Verstärkungsfasern sind in zumindest einem Roving gebündelt. Der Armlehnengrundkörper 30a weist eine Kunststoffmatrix auf. Die Kunststoffmatrix ist im vorliegenden Fall als ein duroplastischer Kunststoff ausgebildet. Die Kunststoffmatrix ist aus einem Kunstharz, insbesondere einem Epoxidharz, gebildet. Der Armlehnengrundkörper 30a weist einen in die Kunststoffmatrix eingebetteten Vorformling 32a auf (vgl. Figur 8). Im vorliegenden Fall ist der Vorformling 32a mittels eines Tailored-Fiber-Placement-Prozesses (TFP) hergestellt. Bei dem Tailored-Fiber-Placement-Prozess wird der zumindest eine Roving entlang von Lastpfaden des Armlehnengrundkörpers 30a abgelegt und fixiert. Der Vorformling 32a ist dazu vorgesehen, zweidimensional gefertigt zu werden. Der Vorformling 32a umfasst einen Stickgrund. Der Stickgrund ist als eine innerste Lage des Vorformlings 32a ausgebildet. Der Stickgrund ist als eine Glasfasermatte ausgebildet. Dadurch bildet der Vorformling 32a und dann auch der fertige Armlehnengrundkörper 30a eine vorteilhafte elektrisch isolierte Innenschicht aus. Dadurch kann der Armlehnengrundkörper 30a vorteilhaft elektrisch isoliert ausgebildet werden. Der Vorformling 32a umfasst eine Vielzahl von Verstärkungsfasern, die in dem zumindest einen Roving gebündelt sind. Der zumindest eine Roving ist entlang von Lastpfaden des Armlehnengrundkörpers 30a in Bahnen auf dem Stickgrund angeordnet. Der zumindest eine Roving ist auf dem Stickgrund mittels zumindest eines Stickfadens des Vorformlings 32a fixiert. Der Vorformling 32a ist im Wesentlichen als eine Abwicklung von Ausmaßen des Armlehnengrundkörpers 30a ausgebildet. Grundsätzlich wäre es ebenfalls denkbar, dass Lichtelemente, wie insbesondere LEDs in den Vorformling mit eingelegt werden. Dadurch kann eine Beleuchtung besonders einfach und leicht in den Armlehnengrundkörper 30a integriert werden.

Alternativ oder zusätzlich wäre es denkbar, dass der Vorformling 32a zumindest ein Fasergelege und/oder zumindest ein Fasergewebe umfasst. Alternativ kann der zumindest eine Vorformling 32a auch mittels eines Webprozesses, eines Flechtprozesses und/oder eines Strickprozesses hergestellt sein.

Der Armlehnengrundkörper 30a ist mittels eines Resin-Transfer-Molding-Prozesses (RTM) hergestellt. Der Vorformling 32a ist dazu vorgesehen, während des Resin-Transfer-Molding-Prozesses in die Kunststoffmatrix eingebettet zu werden. Ein Verfahren zur Herstellung des Armlehnengrundkörpers 30a umfasst einen ersten Verfahrensschritt, in dem der Vorformling 32a mittels des Tailored-Fiber-Placement-Prozesses (TFP-Prozess) hergestellt wird. In dem ersten Verfahrensschritt, der als TRP-Verfahrensschritt ausgebildet ist, wird der Vorformling 32a durch Aufbringen, insbesondere Aufsticken von Fasermatten auf einen, vorzugsweise als Glasfasermatte ausgebildeten Stickgrund gebildet. Die Fasermatten werden entlang der späteren Lastpfade des Armlehnengrundkörpers 30a ausgelegt. In stark belasteten Bereichen, wie etwa im Bereich der Lagerstellen, sind mehr Faserbündel in den Vorformling 32a integriert. Durch das selektive Auslegen der Faserbündel kann der Vorformling 32a und damit der Armlehnengrundkörper 30a besonders leicht ausgebildet werden, da entsprechende Faserbündel nur dort ausgelegt werden, wo sie gebraucht werden. Das Verfahren zur Herstellung des Armlehnengrundkörpers 30a umfasst einen weiteren Verfahrensschritt, der auf den ersten Verfahrensschritt folgt und in dem der Vorformling 32a mittels des Resin-Transfer-Molding-Prozesses in die Kunststoffmatrix eingebettet wird. Der Vorformling 32a ist dazu vorgesehen, während eines Drapierprozesses oder während des Resin-Transfer-Molding-Prozesses umgeformt zu werden. Bei dem Resin-Transfer-Molding-Prozess wird der Vorformling 32a in zumindest ein Formwerkzeug eingelegt, in das die Kunststoffmatrix, insbesondere ein Harz-Härter-Gemisch, unter einem Injektionsdruck injiziert wird, wobei der Vorformling 32a von der Kunststoffmatrix durchtränkt wird. Ein Rohkörper des Armlehnengrundkörpers 30a kann nach einem Aushärten aus dem zumindest einen Formwerkzeug entnommen werden. Der Rohkörper des Armlehnengrundkörpers 30a ist dazu vorgesehen, lackiert zu werden. Der Armlehnengrundkörper 30a weist eine, insbesondere außenliegende, Lackierung auf. Alternativ wäre es jedoch auch denkbar, dass der Armlehnengrundkörper 30a frei von einer, insbesondere außenliegenden, Lackierung ist. Dabei wäre der Armlehnengrundkörper 30a als ein Sichtbauteil ausgebildet. Grundsätzlich wäre es auch denkbar, dass eine Folierung stoffschlüssig mit dem Rohkörper des Armlehnengrundkörpers 30a verbunden ist, beispielsweise mittels eines Tiefziehprozesses, bei dem eine Folie auf den Armlehnengrundkörper 30a aufgebracht wird. Grundsätzlich ist es auch denkbar, dass eine Folierung und/oder eine Beschichtung des Armlehnengrundkörpers 30a, insbesondere alternativ zu einer Lackierung des Rohkörpers des Armlehnengrundkörpers 30a, während eines formgebenden Verfahrens des Armlehnengrundkörpers 30a auf den Armlehnengrundkörper 30a aufgebracht wird, insbesondere bei einem In-Mould-Coating-Prozess. Der Armlehnengrundkörper 30a ist frei von einem, insbesondere zerstörungsfrei, entfernbaren Abdeckelement und/oder einer, insbesondere zerstörungsfrei, entfernbaren Folierung. Ein Austausch einer, insbesondere außenliegenden, Oberfläche des Armlehnengrundkörpers 30a ist nicht möglich, ohne den Armlehnengrundkörper 30a zu beschädigen und/oder den Armlehnengrundkörper 30a vollständig zu tauschen.

Grundsätzlich wäre es auch vorstellbar, dass der Armlehnengrundkörper 30a mittels eines Vakuum-Infiltrations-Prozesses hergestellt ist, wobei der Vorformling 32a dazu vorgesehen ist, während des Vakuum-Infiltrations-Prozesses in die Kunststoffmatrix eingebettet zu werden. Grundsätzlich wäre es auch denkbar, dass der Armlehnengrundkörper 30a mittels eines Prepregmaterials hergestellt ist. Grundsätzlich wäre es auch denkbar, dass die Kunststoffmatrix als ein thermoplastischer Kunststoff ausgebildet ist.

Die Armlehne 22a weist ein Armauflageelement 34a auf. Das Armauflageelement 34a ist in der Gebrauchsstellung 26a zu einem direkten Kontakt mit einem Arm des Passagiers vorgesehen. Das Armauflageelement 34a ist als ein Komfortelement ausgebildet. Das Armauflageelement 34a ist auf einer Oberseite 36a der Armlehne 22a angeordnet. Die Flugzeugsitzvorrichtung 10a umfasst einen vollständig montierten Zustand 48a. Das Armauflageelement 34a ist in dem vollständig montierten Zustand 48a fest mit dem Armlehnengrundkörper 30a verbunden. Das Armauflageelement 34a ist in dem vollständig montierten Zustand 48a kraftschlüssig und/oder formschlüssig mit dem Armlehnengrundkörper 30a verbunden. Im vorliegenden Fall ist das Armauflageelement 34a mittels zweier Befestigungsmittel 142a, 144a mit dem Armlehnengrundkörper 30a verbunden. Die Befestigungsmittel 142a, 144a sind jeweils als eine Schraube ausgebildet. Die Befestigungsmittel 142a, 144a sind jeweils ausgehend von einer Unterseite 46a der Armlehne 22a durch den Armlehnengrundkörper 30a in das Armauflageelement 34a geschraubt. Die Flugzeugsitzvorrichtung 10a umfasst die Befestigungsmittel 142a, 144a. Der Armlehnengrundkörper 30a ist als eine Abstützstruktur ausgebildet, die dazu vorgesehen ist, in die Armlehne 22a, insbesondere in das Armauflageelement 34a, eingeleitete Abstützkräfte in den Sitzteiler 12a abzuleiten.

Die Armlehne 22a weist einen Innenraum 38a auf. Der Innenraum 38a der Armlehne 22a ist von der Armlehne 22a zu einer Umgebung hin abgetrennt. Der Innenraum 38a der Armlehne 22a ist von dem Armlehnengrundkörper 30a und von dem Armauflageelement 34a begrenzt. Der Innenraum 38a der Armlehne 22a zwischen dem Armlehnengrundkörper 30a und dem Armauflageelement 34a ist frei von einer zusätzlichen Abstützstruktur. Der Armlehnengrundkörper 30a ist über einen Großteil einer Längserstreckung des Armlehnengrundkörpers 30a, insbesondere in einer Querschnittsebene betrachtet, die orthogonal zu einer Längsachse der Armlehne 22a ausgerichtet ist, U-förmig ausgebildet. Die Armlehne 22a weist in dem Innenraum 38a der Armlehne 22a, in dem der Armlehnengrundkörper 30a insbesondere U-förmig ausgebildet ist, einen durchgängig hindernisfreien Hohlraum entlang der Längserstreckung des Armlehnengrundkörpers 30a auf, der insbesondere frei von zumindest einer Verstärkungsrippe ist. Der Armlehnengrundkörper 30a trägt in einem Bereich, in dem der Armlehnengrundkörper 30a U-förmig ausgebildet ist, zumindest 80 %, insbesondere zumindest 99 %, der in die Armlehne 22a eingeleiteten Abstützkräfte zu dem Sitzteiler 12a ab.

Mittels des Tailored-Fiber-Placement-Prozesses und des Resin-Transfer-Moulding-Prozesses kann der Armlehnengrundkörper 30a mit vorteilhaft geringen Wandstärken hergestellt werden. Des Weiteren kann der Armlehnengrundkörper 30a mittels des Tailored-Fiber-Placement-Prozesses und des Resin-Transfer-Moulding-Prozesses mit vorteilhaft unterschiedlichen Wandstärken hergestellt werden. Der Armlehnengrundkörper 30a weist im vorliegenden Fall in einem Großteil des Armlehnengrundkörpers 30a, insbesondere in einem Bereich, in dem der Armlehnengrundkörper 30a U-förmig ausgebildet ist, eine Wandstärke von höchstens 3 mm, vorzugsweise höchstens 2 mm, auf. Der Armlehnengrundkörper 30a weist im vorliegenden Fall in dem Anbindungsbereich 60a der Armlehne 22a, insbesondere in einem Bereich der seitlichen Wandungen 56a, 58a, eine Wandstärke auf, die mindestens dreimal so groß ist wie die Wandstärke in dem Bereich, in dem der Armlehnengrundkörper 30a U-förmig ausgebildet ist. Der Armlehnengrundkörper 30a weist im vorliegenden Fall in dem Anbindungsbereich 60a der Armlehne 22a, insbesondere in einem Bereich der seitlichen Wandungen 56a, 58a, insbesondere zumindest bereichsweise, eine Wandstärke von mindestens 8 mm, vorzugsweise mindestens 10 mm, auf. Durch den Tailored-Fiber-Placement-Prozess und den Resin-Transfer-Moulding-Prozess können, insbesondere unter Verwendung eines selben Materials, große Wandstärken erreicht werden, ohne dass es dort zu Einfallstellen kommt. Dadurch kann der Armlehnengrundkörper 30a vorteilhaft präzise und maßgetreu sowie mit einer vorteilhaft hohen Oberflächengüte gefertigt werden.

Die Flugzeugsitzvorrichtung 10a umfasst ein Anbindungsmodul 40a. Das Anbindungsmodul 40a ist schwenkbar mit dem Sitzteiler 12a verbunden. Das Anbindungsmodul 40a ist dazu vorgesehen, die Armlehne 22a schwenkbar zu dem Sitzteiler 12a zu lagern. Das Anbindungsmodul 40a ist dazu vorgesehen, die Armlehne 22a schwenkbar an dem Sitzteiler 12a zu lagern. Das Anbindungsmodul 40a ist in einem Winkelbereich zwischen der Gebrauchsstellung 26a und der Nichtgebrauchsstellung 28a schwenkbar zu dem Sitzteiler 12a gelagert. Die Armlehne 22a ist um mindestens 110 Grad von der Gebrauchsstellung 26a in die Nichtgebrauchsstellung 28a verschwenkbar. Der Winkelbereich beträgt im vorliegenden Fall 110 Grad. Die Armlehne 22a weist einen Anbindungsraum 42a auf. Das Anbindungsmodul 40a ist dazu vorgesehen, in dem Anbindungsraum 42a der Armlehne 22a mit der Armlehne 22a gekoppelt zu werden.

In einem Montagezustand 44a, in dem das Anbindungsmodul 40a mit dem Sitzteiler 12a verbunden ist, ist das Anbindungsmodul 40a zu einer Kopplung mit dem Armlehnengrundkörper 30a vorgesehen. Das Anbindungsmodul 40a ist als eine Montageschnittstelle für die Armlehne 22a ausgebildet. Das Anbindungsmodul 40a ist modular ausgebildet. Das Anbindungsmodul 40a ist dazu vorgesehen, dass unterschiedlich ausgestaltete Armlehnen mit dem Anbindungsmodul 40a koppelbar sind. Dabei weisen die Armlehnen jeweils eine selbe Schnittstelle zur Kopplung mit dem Anbindungsmodul 40a auf. Der Armlehnengrundkörper 30a ist an dem Anbindungsmodul 40a in dem Montagezustand 44a, in dem das Anbindungsmodul 40a mit dem Sitzteiler 12a verbunden ist, montierbar. Die Armlehne 22a, insbesondere der Armlehnengrundkörper 30a, ist in dem Montagezustand 44a, in dem das Anbindungsmodul 40a mit dem Sitzteiler 12a verbunden ist, dazu vorgesehen, auf das Anbindungsmodul 40a aufgeschoben zu werden. Das Anbindungsmodul 40a ist in dem Montagezustand 44a, in dem das Anbindungsmodul 40a mit dem Sitzteiler 12a verbunden ist, dazu vorgesehen, in die Armlehne 22a, insbesondere in den Anbindungsraum 42a der Armlehne 22a eingeschoben zu werden. Der Anbindungsraum 42a der Armlehne 22a ist in der Gebrauchsstellung 26a der Armlehne 22a zu der Unterseite 46a der Armlehne 22a hin geöffnet. Das Anbindungsmodul 40a ist in dem Montagezustand 44a, in dem das Anbindungsmodul 40a mit dem Sitzteiler 12a verbunden ist, dazu vorgesehen, ausgehend von der Unterseite 46a der Armlehne 22a in den Anbindungsraum 42a der Armlehne 22a in Richtung der Oberseite 36a der Armlehne 22a eingeschoben zu werden. Eine Verbindungsrichtung des Anbindungsmoduls 40a und der Armlehne 22a ist zumindest im Wesentlichen orthogonal zu der Aufständerebene ausgerichtet, wenn der Armlehnengrundkörper 30a in einer Ausrichtung wie in der Gebrauchsstellung 26a positioniert ist. Der Armlehnengrundkörper 30a ist von dem Anbindungsmodul 40a in dem Montagezustand 44a, in dem das Anbindungsmodul 40a mit dem Sitzteiler 12a verbunden ist, demontierbar. Der Armlehnengrundkörper 30a ist in dem Montagezustand 44a, in dem das Anbindungsmodul 40a mit dem Sitzteiler 12a verbunden ist, abnehmbar von dem Anbindungsmodul 40a ausgebildet. Zu einer Montage und/oder Demontage der Armlehne 22a muss das Anbindungsmodul 40a nicht von dem Sitzteiler 12a getrennt werden.

Der Armlehnengrundkörper 30a ist in dem vollständig montierten Zustand 48a über das Anbindungsmodul 40a mit dem Sitzteiler 12a gekoppelt. Die Armlehne 22a ist in dem vollständig montierten Zustand 48a vollständig an dem Sitzteiler 12a montiert und nutzbar. Der Armlehnengrundkörper 30a ist in dem vollständig montierten Zustand 48a über das Anbindungsmodul 40a mit dem Sitzteiler 12a verbunden. Das Anbindungsmodul 40a ist in dem vollständig montierten Zustand 48a zumindest im Wesentlichen in dem Anbindungsraum 42a der Armlehne 22a aufgenommen. Der Anbindungsraum 42a ist zur Aufnahme des Anbindungsmoduls 40a in der Armlehne 22a vorgesehen. Der Armlehnengrundkörper 30a bildet den Anbindungsraum 42a aus. Der Anbindungsraum 42a ist, insbesondere in einer Seitenansicht der Flugzeugsitzvorrichtung 10a betrachtet, durch eine Außenkontur des Armlehnengrundkörpers 30a begrenzt. Die Seitenansicht entspricht einer Blickrichtung entlang der Schwenkachse 24a der Armlehne 22a. Im vorliegenden Fall ist das Anbindungsmodul 40a in dem vollständig montierten Zustand 48a vollständig in dem Anbindungsraum 42a der Armlehne 22a angeordnet. Das Anbindungsmodul 40a ragt in dem vollständig montierten Zustand 48a nicht über die Außenkontur des Armlehnengrundkörpers 30a hinaus.

Der Armlehnengrundkörper 30a ist in dem vollständig montierten Zustand 48a mittels zweier Befestigungsmittel 50a, 52a mit dem Anbindungsmodul 40a verbunden. Die Befestigungsmittel 50a, 52a sind jeweils als Schraube ausgebildet. Die Flugzeugsitzvorrichtung 10a umfasst die Befestigungsmittel 50a, 52a. Grundsätzlich wäre auch eine von zwei abweichende Anzahl an Befestigungsmitteln 50a, 52a denkbar. Die Befestigungsmittel 50a, 52a sind in dem vollständig montierten Zustand 48a durch das Armauflageelement 34a der Armlehne 22a verdeckt. Das Anbindungsmodul 40a ist in dem vollständig montierten Zustand 48a kraftschlüssig und/oder formschlüssig mit dem Armlehnengrundkörper 30a verbunden. Das Anbindungsmodul 40a ist über die Befestigungsmittel 50a, 52a in einem Montagezustand 54a mit dem Armlehnengrundkörper 30a verbindbar, in dem das Armauflageelement 34a nicht mit dem Armlehnengrundkörper 30a gekoppelt ist.

Alternativ ist es denkbar, dass der Armlehnengrundkörper 30a mittels zumindest einer Rastverbindung mit dem Anbindungsmodul 40a verbindbar ist. Dabei könnten das Anbindungsmodul 40a und die Armlehne 22a zueinander korrespondierende Raststrukturen aufweisen, die zu einer formschlüssigen Kopplung der Armlehne 22a mit dem Anbindungsmodul 40a vorgesehen sind.

Das Anbindungsmodul 40a ist in dem Anbindungsraum 42a der Armlehne 22a von seitlichen Wandungen 56a, 58a des Armlehnengrundkörpers 30a begrenzt. Das Anbindungsmodul 40a ist in dem Anbindungsraum 42a der Armlehne 22a von den seitlichen Wandungen 56a, 58a des Armlehnengrundkörpers 30a zumindest zu einem Großteil verdeckt. Die seitlichen Wandungen 56a, 58a des Armlehnengrundkörpers 30a begrenzen den Anbindungsraum 42a zu mindestens zwei Seiten. Das Anbindungsmodul 40a liegt in dem vollständig montierten Zustand 48a in dem Anbindungsraum 42a an den seitlichen Wandungen 56a, 58a des Armlehnengrundkörpers 30a an. Das Anbindungsmodul 40a ist in dem vollständig montierten Zustand 48a, insbesondere in der Seitenansicht der Flugzeugsitzvorrichtung 10a betrachtet, zumindest zu einem Großteil von dem Armlehnengrundkörper 30a verdeckt.

Die Armlehne 22a weist in dem Anbindungsbereich 60a der Armlehne 22a seitliche Außenflächen 62a, 64a auf, die vollständig geschlossen sind und von dem Armlehnengrundkörper 30a ausgebildet sind. In dem Anbindungsbereich 60a ist die Armlehne 22a mit dem Anbindungsmodul 40a gekoppelt. In dem Anbindungsbereich 60a ist die Armlehne 22a mit dem Sitzteiler 12a gekoppelt. Der Anbindungsbereich 60a ist als ein hinterer Bereich der Armlehne 22a ausgebildet. Der Anbindungsbereich 60a erstreckt sich höchstens 10 cm von der Schwenkachse 24a der Armlehne 22a weg. Die seitlichen Wandungen 56a, 58a des Armlehnengrundkörpers 30a bilden die seitlichen Außenflächen 62a, 64a aus. In dem Anbindungsbereich 60a der Armlehne 22a überlappen sich, in der Seitenansicht der Flugzeugsitzvorrichtung 10a betrachtet, der Armlehnengrundkörper 30a und das Anbindungsmodul 40a in dem vollständig montierten Zustand 48a. Die seitlichen Außenflächen 62a, 64a sind in dem Anbindungsbereich 60a unterbrechungsfrei ausgebildet. Die Schwenkachse 24a der Armlehne 22a schneidet die seitlichen Außenflächen 62a, 64a in dem Anbindungsbereich 60a. Die Armlehne 22a, insbesondere der Armlehnengrundkörper 30a, ist in dem Anbindungsbereich 60a der Armlehne 22a frei von zumindest einem seitlich angeordneten Abdeckelement.

Das Anbindungsmodul 40a weist einen Anbindungsgrundkörper 66a auf. Der Anbindungsgrundkörper 66a ist in dem vollständig montierten Zustand 48a zumindest im Wesentlichen in dem Anbindungsraum 42a der Armlehne 22a aufgenommen. Der Anbindungsgrundkörper 66a ist in dem vollständig montierten Zustand 48a zumindest im Wesentlichen in dem Armlehnengrundkörper 30a aufgenommen. Der Anbindungsgrundkörper 66a ist in dem Anbindungsraum 42a der Armlehne 22a von den seitlichen Wandungen 56a, 58a des Armlehnengrundkörpers 30a zumindest zu einem Großteil verdeckt. Der Anbindungsgrundkörper 66a ist in dem vollständig montierten Zustand 48a kraftschlüssig und/oder formschlüssig mit dem Armlehnengrundkörper 30a verbunden. Der Armlehnengrundkörper 30a ist mittels eines der zwei Befestigungsmittel 50a, 52a mit dem Anbindungsgrundkörper 66a verbunden. Der Anbindungsgrundkörper 66a ist in dem vollständig montierten Zustand 48a zumindest im Wesentlichen in dem Anbindungsraum 42a der Armlehne 22a aufgenommen. Der Anbindungsgrundkörper 66a ist plattenförmig ausgebildet. Eine Haupterstreckungsebene des Anbindungsgrundkörpers 66a ist orthogonal zu der Schwenkachse 24a ausgerichtet. Unter einer "Haupterstreckungsebene" des Anbindungsgrundkörpers 66a soll vorzugsweise eine Ebene verstanden werden, welche parallel zu einer größten Seitenfläche eines kleinsten gedachten Quaders ist, welcher den Anbindungsgrundkörper 66a gerade noch vollständig umschließt, und insbesondere durch den Mittelpunkt des Quaders verläuft.

Das Anbindungsmodul 40a weist einen weiteren Anbindungsgrundkörper 68a auf. Der weitere Anbindungsgrundkörper 68a ist zumindest im Wesentlichen identisch zu dem Anbindungsgrundkörper 66a ausgebildet. Der weitere Anbindungsgrundkörper 68a ist symmetrisch zu dem Anbindungsgrundkörper 66a ausgebildet. Der weitere Anbindungsgrundkörper 68a ist in dem vollständig montierten Zustand 48a symmetrisch zu dem Anbindungsgrundkörper 66a angeordnet, insbesondere relativ zu dem Sitzteiler 12a. Der Anbindungsgrundkörper 66a und der weitere Anbindungsgrundkörper 68a sind über die Schwenkachse 24a schwenkbar zu dem Sitzteiler 12a gelagert. Grundsätzlich wäre es auch vorstellbar, dass das Anbindungsmodul 40a lediglich den Anbindungsgrundkörper 66a aufweist und dass auf den weiteren Anbindungsgrundkörper 68a verzichtet wird.

Das Anbindungsmodul 40a weist eine Schwenklagereinheit 70a auf. Über die Schwenklagereinheit 70a ist das Anbindungsmodul 40a schwenkbar an dem Sitzteiler 12a gelagert. Der Sitzteiler 12a weist ein Schwenklager 72a auf. Das Schwenklager 72a bildet die Schwenkachse 24a aus. Das Schwenklager 72a des Sitzteilers 12a ist in das Trägerelement 14a des Sitzteilers 12a integriert. Das Schwenklager 72a des Sitzteilers 12a ist an einer Oberseite des Trägerelements 14a des Sitzteilers 12a angeordnet. Die Schwenklagereinheit 70a des Anbindungsmoduls 40a ist mit dem Schwenklager 72a des Sitzteilers 12a verbunden. Die Schwenklagereinheit 70a des Anbindungsmoduls 40a greift formschlüssig und/oder kraftschlüssig in das Schwenklager 72a des Sitzteilers 12a ein. Die Schwenklagereinheit 70a des Anbindungsmoduls 40a ist formschlüssig und/oder kraftschlüssig mit dem Schwenklager 72a des Sitzteilers 12a verbunden. Im vorliegenden Fall ist die Schwenklagereinheit 70a dazu vorgesehen, in den Sitzteiler 12a eingeschoben und formschlüssig mittels eines Sicherungselements in dem Sitzteiler 12a gesichert zu werden. Das Sicherungselement ist als eine Madenschraube ausgebildet. Das Sicherungselement ist zu einer formschlüssigen Verbindung der Schwenklagereinheit 70a mit dem Sitzteiler 12a vorgesehen. Alternativ kann die Schwenklagereinheit 70a in dem Montagezustand 44a, in dem das Anbindungsmodul 40a mit dem Sitzteiler 12a verbunden ist, in das Schwenklager 72a des Sitzteilers 12a eingepresst sein. Im vorliegenden Fall weist ein Schwenklagerelement der Schwenklagereinheit 70a eine Verzahnung auf, die zu einer Drehkopplung in der Schwenklagereinheit 70a vorgesehen ist. Die Schwenklagereinheit 70a weist eine zylindrische Grundform auf. Im vorliegenden Fall ist die Schwenklagereinheit 70a mehrteilig ausgebildet. Ein Teil der Schwenklagereinheit 70a ist drehfest mit dem Sitzteiler 12a verbunden und ein weiterer Teil der Schwenklagereinheit 70a ist drehfest mit der Armlehne 22a verbunden. Der Teil und der weitere Teil sind drehbar zueinander gelagert. Die Schwenklagereinheit 70a bildet die Schwenkachse 24a aus. Grundsätzlich wäre es jedoch auch denkbar, dass die Schwenklagereinheit 70a einteilig ausgebildet ist. Grundsätzlich ist es dabei denkbar, dass die Schwenklagereinheit 70a um die Schwenkachse 24a gleitend in dem Schwenklager 72a des Sitzteilers 12a gelagert ist.

Die Schwenklagereinheit 70a ist mit dem Anbindungsgrundkörper 66a verbunden. Die Schwenkachse 24a der Armlehne 22a schneidet den Anbindungsgrundkörper 66a. Die Schwenklagereinheit 70a ist mit dem weiteren Anbindungsgrundkörper 68a verbunden. Die Schwenkachse 24a der Armlehne 22a schneidet den weiteren Anbindungsgrundkörper 68a. Der Anbindungsgrundkörper 66a und der weitere Anbindungsgrundkörper 68a sind über die Schwenklagereinheit 70a drehfest miteinander verbunden. Die Schwenklagereinheit 70a weist im vorliegenden Fall zwei nicht näher dargestellte Formschlusselemente 146a auf. Die Formschlusselemente 146a der Schwenklagereinheit 70a sind zu einer Kopplung mit dem Anbindungsgrundkörper 66a und dem weiteren Anbindungsgrundkörper 68a vorgesehen. Im vorliegenden Fall sind die Formschlusselemente 146a der Schwenklagereinheit 70a mittels einer Verzahnung mit dem Schwenklagerelement der Schwenklagereinheit 70a drehfest verbunden. Der Anbindungsgrundkörper 66a und der weitere Anbindungsgrundkörper 68a weisen jeweils, insbesondere auf einer dem Sitzteiler 12a zugewandten Seite des Anbindungsgrundkörpers 66a und des weiteren Anbindungsgrundkörpers 68a, eine nicht näher dargestellte Ausnehmung 148a auf, die zu einer Aufnahme der Schwenklagereinheit 70a, insbesondere eines der Formschlusselemente 146a der Schwenklagereinheit 70a, vorgesehen ist. Die Formschlusselemente 146a der Schwenklagereinheit 70a sind korrespondierend zu den Ausnehmungen 148a des Anbindungsgrundkörpers 66a bzw. des weiteren Anbindungsgrundkörpers 68a ausgebildet. Die Formschlusselemente 146a weisen eine Form auf, die die Ausnehmungen 148a jeweils zumindest im Wesentlichen ausfüllen. Beispielsweise können die Ausnehmungen 148a langlochförmig, rechteckförmig, sternförmig oder nierenförmig ausgebildet sein. Grundsätzlich können die Ausnehmungen 148a und die Formschlusselemente 146a aber auch eine andere, dem Fachmann für geeignet erscheinende, zueinander korrespondierende Form für eine formschlüssige und drehfeste Kopplung der Ausnehmungen 148a und der Formschlusselemente 146a aufweisen. Die Formschlusselemente 146a der Schwenklagereinheit 70a sind zumindest in dem vollständig montierten Zustand 48a um die Schwenkachse 24a formschlüssig mit den Ausnehmungen 148a des Anbindungsgrundkörpers 66a bzw. des weiteren Anbindungsgrundkörpers 68a gekoppelt. Die Formschlusselemente 146a der Schwenklagereinheit 70a sind in dem vollständig montierten Zustand 48a drehfest mit den Ausnehmungen 148a des Anbindungsgrundkörpers 66a bzw. des weiteren Anbindungsgrundkörpers 68a verbunden. Der Anbindungsgrundkörper 66a und der weitere Anbindungsgrundkörper sind jeweils mittels zumindest eines Befestigungsmittels 150a mit der Schwenklagereinheit 70a verbunden. Im vorliegenden Fall sind der Anbindungsgrundkörper 66a und der weitere Anbindungsgrundkörper 68a jeweils mittels vier Befestigungsmitteln 150a mit der Schwenklagereinheit 70a verbunden. Die Befestigungsmittel 150a sind jeweils als eine Schraube ausgebildet. Die Flugzeugsitzvorrichtung 10a umfasst die Befestigungsmittel 150a. Alternativ wäre es jedoch auch denkbar, dass der Anbindungsgrundkörper 66a und der weitere Anbindungsgrundkörper 68a jeweils mittels zwei Befestigungsmitteln 150a oder mittels einer anderen, einem Fachmann für geeignet erscheinenden Anzahl an Befestigungsmitteln 150a mit der Schwenklagereinheit 70a verbunden sind. Grundsätzlich ist es denkbar, dass die Schwenklagereinheit 70a in dem Schwenklager 72a des Sitzteilers 12a montiert wird und danach der Anbindungsgrundkörper 66a und der weitere Anbindungsgrundkörper 68a mit der Schwenklagereinheit 70a verbunden werden. Alternativ wäre es auch denkbar, dass die Schwenklagereinheit 70a gemeinsam mit dem Anbindungsgrundkörper 66a oder dem weiteren Anbindungsgrundkörper 68a an dem Schwenklager 72a des Sitzteilers 12a montiert werden, wobei einer der Anbindungsgrundkörper 66a, 68a nach der Montage der Schwenklagereinheit 70a in dem Schwenklager 72a des Sitzteilers 12a mit der Schwenklagereinheit 70a verbunden wird.

Das Anbindungsmodul 40a weist eine Kulissenführung 74a auf. Die Kulissenführung 74a bildet einen ersten Endanschlag 76a für die Gebrauchsstellung 26a und einen zweiten Endanschlag 78a für die Nichtgebrauchsstellung 28a aus. Die Kulissenführung 74a ist entlang eines Kreisbogenabschnitts um die Schwenkachse 24a der Armlehne 22a angeordnet. Die Kulissenführung 74a ist in dem Anbindungsgrundkörper 66a angeordnet. Die Kulissenführung 74a ist als eine Nut ausgebildet, die den Anbindungsgrundkörper 66a durchbricht. In der Kulissenführung 74a ist ein Anschlagelement 80a des Sitzteilers 12a angeordnet. Das Anschlagelement 80a ist als ein Bolzen ausgebildet.

Das Anbindungsmodul 40a weist eine weitere Kulissenführung 82a auf. Die Kulissenführung 74a und die weitere Kulissenführung 82a sind symmetrisch zueinander angeordnet. Die weitere Kulissenführung 82a bildet gemeinsam mit der Kulissenführung 74a den ersten Endanschlag 76a für die Gebrauchsstellung 26a und den zweiten Endanschlag 78a für die Nichtgebrauchsstellung 28a aus. In der Seitenansicht der Flugzeugsitzvorrichtung 10a betrachtet sind die Kulissenführung 74a und die weitere Kulissenführung 82a deckungsgleich. Die weitere Kulissenführung 82a ist entlang eines Kreisbogenabschnitts um die Schwenkachse 24a der Armlehne 22a angeordnet. Die weitere Kulissenführung 82a ist in dem weiteren Anbindungsgrundkörper 68a angeordnet. Die weitere Kulissenführung 82a ist als eine Nut ausgebildet, die den weiteren Anbindungsgrundkörper 68a durchbricht. In der weiteren Kulissenführung 82a ist ein als Bolzen ausgebildetes weiteres Anschlagelement des Sitzteilers 12a angeordnet.

Grundsätzlich wäre es denkbar, dass das Anbindungsmodul 40a lediglich eine Kulissenführung 74a, 82a aufweist, wobei lediglich der Anbindungsgrundkörper 66a oder der weitere Anbindungsgrundkörper 68a eine Nut aufweist, in der ein Anschlagelement 80a des Sitzteilers 12a geführt ist.

Die Flugzeugsitzvorrichtung 10a umfasst einen Kabelkanal 84a, welcher ausgehend von dem Armlehnengrundkörper 30a durch das Anbindungsmodul 40a in den Sitzteiler 12a verläuft. Der Kabelkanal 84a ist in einem Abschnitt durch den Sitzteiler 12a geführt. Der Kabelkanal 84a ist in dem Abschnitt von einer Rückseite des Sitzteilers 12a auf eine Vorderseite 88a des Sitzteilers 12a geführt. Die Flugzeugsitzvorrichtung 10a weist ein Abdeckelement 86a auf, welches mit dem Sitzteiler 12a verbunden ist. Das Abdeckelement 86a bildet einen Abschnitt des Kabelkanals 84a aus, welcher insbesondere auf der Vorderseite 88a des Sitzteilers 12a verläuft. Das Abdeckelement 86a ist kraftschlüssig und/oder formschlüssig mit dem Trägerelement 14a des Sitzteilers 12a verbunden. Das Abdeckelement 86a ist als eine Verkleidung des Sitzteilers 12a ausgebildet. Das Abdeckelement 86a umgibt den Sitzteiler 12a, insbesondere das Trägerelement 14a des Sitzteilers 12a, zumindest in einem Bereich zwischen der Lagerstelle 20a und der Unterseite 46a der Armlehne 22a zumindest im Wesentlichen.

Der Kabelkanal 84a ist dazu vorgesehen, zumindest ein nicht näher dargestelltes Kabel aufzunehmen. Das zumindest eine Kabel ist beispielsweise als ein Bowdenzug oder als eine elektrische Leitung ausgebildet. Das zumindest eine Kabel ist dazu vorgesehen, wenigstens ein mechanisches und/oder elektronisches Betätigungs- und/oder Bediensignal zu transferieren, beispielsweise zur Verstellung einer Rückenlehne und/oder einer Beinstütze und/oder zur Bedienung eines In-Flight-Entertainment-Systems. Die Armlehne 22a weist zumindest ein nicht näher dargestelltes Betätigungs- und/oder Bedienelement auf. Das zumindest eine Betätigungs- und/oder Bedienelement ist in einer von mehreren Aussparungen 90a, 92a, 94a, 96a, 98a des Armlehnengrundkörpers 30a angeordnet. Grundsätzlich ist es denkbar, dass der Armlehnengrundkörper 30a auch lediglich eine Aussparung 90a, 92a, 94a, 96a, 98a oder eine andere Anzahl an Aussparungen 90a, 92a, 94a, 96a, 98a zur Aufnahme eines Betätigungs- und/oder Bedienelements aufweist. Grundsätzlich wäre es auch denkbar, dass der Armlehnengrundkörper 30a zur Ausbildung der Aussparungen 90a, 92a, 94a, 96a, 98a Sollbruchstellen aufweist, mittels denen die Aussparungen 90a, 92a, 94a, 96a, 98a bei Bedarf erzeugt werden können. Das zumindest eine Betätigungs- und/oder Bedienelement ist an dem Armlehnengrundkörper 30a befestigt. Das zumindest eine Betätigungs- und/oder Bedienelement ist mit dem zumindest einen Kabel funktional gekoppelt. Grundsätzlich wäre es denkbar, dass die Armlehne 22a zumindest eine Blindkappe aufweist, die in zumindest einer der Aussparungen 90a, 92a, 94a, 96a, 98a des Armlehnengrundkörpers 30a statt einem Betätigungs- und/oder Bedienelement angeordnet werden kann.

In dem vollständig montierten Zustand 48a erstreckt sich der Sitzteiler 12a bis auf eine Rückseite 100a der Armlehne 22a. Der Sitzteiler 12a bildet eine hintere Abdeckung des Anbindungsraums 42a der Armlehne 22a aus. Der Sitzteiler 12a ist teilweise in dem Anbindungsraum 42a angeordnet. Der Sitzteiler 12a ist in dem Anbindungsbereich 60a zwischen dem Anbindungsgrundkörper 66a und dem weiteren Anbindungsgrundkörper 68a angeordnet. Die Armlehne 22a und das Anbindungsmodul 40a sind beweglich zu dem Sitzteiler 12a ausgebildet.

Die Armlehne 22a umfasst einen Freigabemechanismus 102a. Der Freigabemechanismus 102a ist als ein Handicap-Mechanismus ausgebildet. Der Freigabemechanismus 102a ist bei einer Betätigung dazu vorgesehen, eine Verschwenkung der Armlehne 22a aus der Gebrauchsstellung 26a in die Nichtgebrauchsstellung 28a zuzulassen. Der Freigabemechanismus 102a ist in einem Normalbetriebszustand dazu vorgesehen, eine Verschwenkung der Armlehne 22a aus der Gebrauchsstellung 26a in die Nichtgebrauchsstellung 28a zu blockieren. Der Freigabemechanismus 102a ist zumindest im Wesentlichen innerhalb der Armlehne 22a, insbesondere in dem Innenraum 38a der Armlehne 22a, angeordnet. Der Freigabemechanismus 102a ist mittels mehrerer Befestigungsmittel 104a, die insbesondere als Schrauben ausgebildet sind, mit dem Armlehnengrundkörper 30a verbunden. Die Flugzeugsitzvorrichtung 10a umfasst die mehreren Befestigungsmittel 104a. Der Freigabemechanismus 102a weist ein Formschlusselement 106a auf, welches in der Gebrauchsstellung 26a der Armlehne 22a dazu vorgesehen ist, in eine Ausnehmung 108a des Sitzteilers 12a einzugreifen. Der Freigabemechanismus 102a weist ein Betätigungselement 110a auf. Das Betätigungselement 110a des Freigabemechanismus 102a ist als ein Hebel ausgebildet. Das Betätigungselement 110a des Freigabemechanismus 102a ragt aus einer Unterseite des Armlehnengrundkörpers 30a hinaus. Das Formschlusselement 106a ist mit dem Betätigungselement 110a gekoppelt. Bei einer Betätigung des Betätigungselements 110a ist das Formschlusselement 106a dazu vorgesehen, aus der Ausnehmung 108a des Sitzteilers 12a herausbewegt zu werden. Dadurch kann eine Verschwenkung der Armlehne 22a freigegeben werden.

Die Flugzeugsitzvorrichtung 10a weist eine Einbuchtung 112a auf, die in der Gebrauchsstellung 26a direkt an der Vorderseite 88a des Sitzteilers 12a unterhalb des Armlehnengrundkörpers 30a angeordnet ist. Die Einbuchtung 112a ist auf zumindest drei Seiten von dem Armlehnengrundkörper 30a umgeben. Die Einbuchtung 112a grenzt an die seitlichen Wandungen 56a, 58a des Armlehnengrundkörpers 30a an. Die Einbuchtung 112a ist in der Gebrauchsstellung 26a der Armlehne 22a in der Seitenansicht der Flugzeugsitzvorrichtung 10a betrachtet durch den Armlehnengrundkörper 30a verdeckt (vgl. Figur 1).

In der Figur 9 ist ein Verfahren 114a zur Montage der Flugzeugsitzvorrichtung 10a gezeigt. Das Verfahren 114a umfasst im vorliegenden Fall einen ersten Verfahrensschritt 116a und einen zweiten Verfahrensschritt 118a.

Das Anbindungsmodul 40a wird in dem ersten Verfahrensschritt 116a mit dem Sitzteiler 12a gekoppelt. Das Anbindungsmodul 40a wird in dem ersten Verfahrensschritt 116a an den Sitzteiler 12a angebunden. Die Schwenklagereinheit 70a des Anbindungsmoduls 40a wird in dem ersten Verfahrensschritt 116a mit dem Schwenklager 72a des Sitzteilers 12a verbunden. Der Anbindungsgrundkörper 66a wird in dem ersten Verfahrensschritt 116a mit der Schwenklagereinheit 70a des Anbindungsmoduls 40a drehfest verbunden. Der weitere Anbindungsgrundkörper 68a wird in dem ersten Verfahrensschritt 116a mit der Schwenklagereinheit 70a des Anbindungsmoduls 40a drehfest verbunden. Die Armlehne 22a ist in dem ersten Verfahrensschritt 116a von dem Anbindungsmodul 40a und dem Sitzteiler 12a getrennt. Nach dem ersten Verfahrensschritt 116a besteht der Montagezustand 44a, in dem das Anbindungsmodul 40a mit dem Sitzteiler 12a verbunden ist. Das Anbindungsmodul 40a ist nach dem ersten Verfahrensschritt 116a schwenkbar an dem Sitzteiler 12a gelagert.

Der Armlehnengrundkörper 30a wird in dem zweiten Verfahrensschritt 118a, der auf den ersten Verfahrensschritt 116a folgt, mit dem Anbindungsmodul 40a gekoppelt. Die Armlehne 22a wird in dem zweiten Verfahrensschritt 118a mit dem Anbindungsmodul 40a verbunden. Die Armlehne 22a, insbesondere der Armlehnengrundkörper 30a, wird in dem zweiten Verfahrensschritt 118a auf das Anbindungsmodul 40a aufgeschoben. Das Anbindungsmodul 40a wird in dem zweiten Verfahrensschritt 118a in die Armlehne 22a, insbesondere in den Armlehnengrundkörper 30a, eingeschoben. Die Armlehne 22a, insbesondere der Armlehnengrundkörper 30a, ist nach dem zweiten Verfahrensschritt 118a über das Anbindungsmodul 40a schwenkbar mit dem Sitzteiler 12a verbunden.

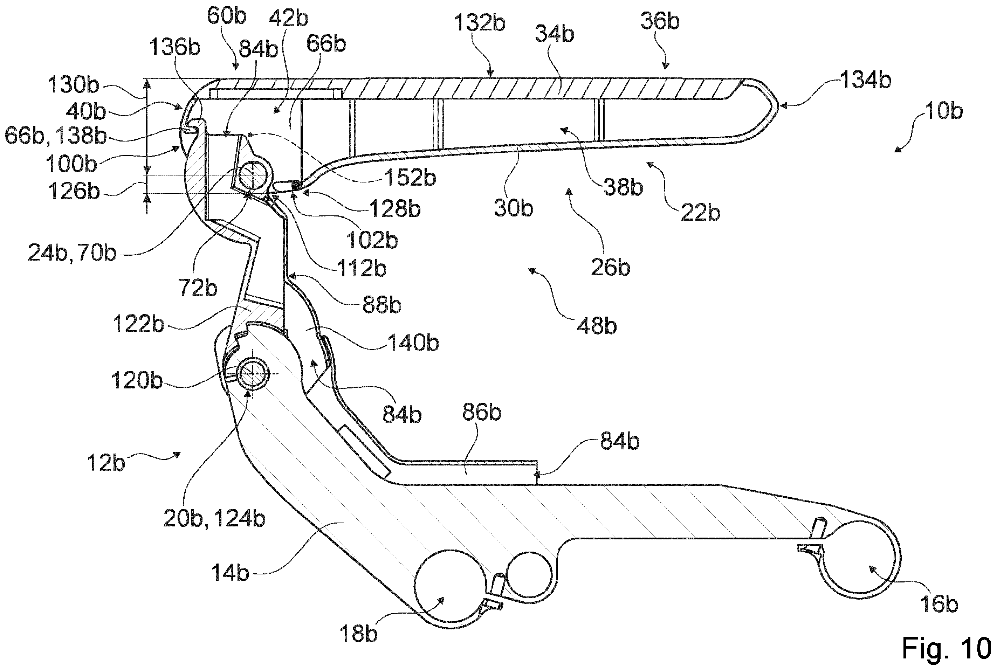

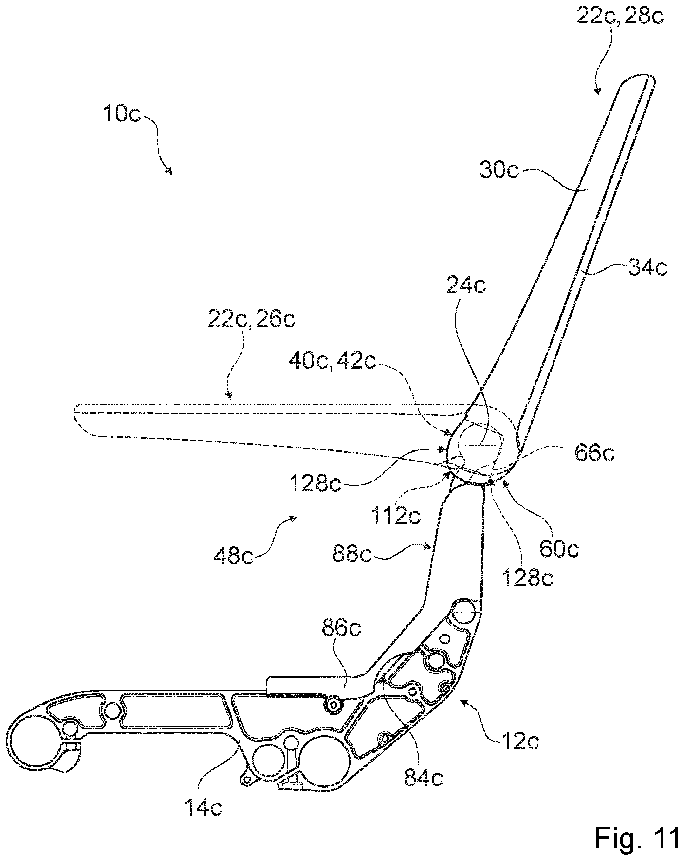

In den Figuren 10 und 11 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des ersten Ausführungsbeispiels, insbesondere der Figuren 1 bis 9, verwiesen werden kann. Zur Unterscheidung der Ausführungsbeispiele ist der Buchstabe a den Bezugszeichen des Ausführungsbeispiels in den Figuren 1 bis 9 nachgestellt. In den Ausführungsbeispielen der Figuren 10 und 11 ist der Buchstabe a durch die Buchstaben b bzw. c ersetzt.

In der Figur 10 ist eine Flugzeugsitzvorrichtung 10b in dem zweiten Ausführungsbeispiel gezeigt. Die Flugzeugsitzvorrichtung 10b umfasst einen Sitzteiler 12b. Der Sitzteiler 12b weist zwei Anbindungsstellen 16b, 18b auf, mittels denen der Sitzteiler 12b mit der Aufständereinheit, insbesondere mit zwei Tragrohren der Aufständereinheit, verbunden ist. Die Flugzeugsitzvorrichtung 10b umfasst eine Armlehne 22b. Die Armlehne 22b weist eine Schwenkachse 24b auf. Die Armlehne 22b ist um die Schwenkachse 24b schwenkbar gelagert. Die Armlehne 22b weist einen Armlehnengrundkörper 30b auf. Die Armlehne 22b weist ein Armauflageelement 34b auf. Das Armauflageelement 34b ist auf einer Oberseite 36b der Armlehne 22b angeordnet. Ein Innenraum 38b der Armlehne 22b zwischen dem Armlehnengrundkörper 30b und dem Armauflageelement 34b ist frei von einer zusätzlichen Abstützstruktur. Die Flugzeugsitzvorrichtung 10b umfasst ein Anbindungsmodul 40b. Die Armlehne 22b weist einen Anbindungsraum 42b auf. In einem Montagezustand, in dem das Anbindungsmodul 40b mit dem Sitzteiler 12b verbunden ist, ist das Anbindungsmodul 40b zu einer Kopplung mit dem Armlehnengrundkörper 30b vorgesehen. Der Armlehnengrundkörper 30b ist in einem vollständig montierten Zustand 48b über das Anbindungsmodul 40b mit dem Sitzteiler 12b gekoppelt. Das Anbindungsmodul 40b ist in dem Anbindungsraum 42b der Armlehne 22b von seitlichen Wandungen des Armlehnengrundkörpers 30b begrenzt. Die Armlehne 22b weist in einem Anbindungsbereich 60b der Armlehne 22b seitliche Außenflächen auf, die vollständig geschlossen sind und von dem Armlehnengrundkörper 30b ausgebildet sind. Das Anbindungsmodul 40b weist einen Anbindungsgrundkörper 66b auf. Das Anbindungsmodul 40b weist einen nicht sichtbaren weiteren Anbindungsgrundkörper auf. Das Anbindungsmodul 40b weist eine Schwenklagereinheit 70b auf. Der Sitzteiler 12b weist ein Schwenklager 72b auf. Die Armlehne 22b umfasst einen Freigabemechanismus 102b, der als ein Handicap-Mechanismus ausgebildet ist. Die Flugzeugsitzvorrichtung 10b weist eine Einbuchtung 112b auf, die in der Gebrauchsstellung 26b direkt an einer Vorderseite 88b des Sitzteilers 12b unterhalb des Armlehnengrundkörpers 30b angeordnet ist.

Im vorliegenden Fall ist der Sitzteiler 12b mehrteilig ausgebildet. Der Sitzteiler 12b weist ein Trägerelement 14b auf. Das Trägerelement 14b des Sitzteilers 12b ist einteilig ausgebildet.

Im Unterschied zu dem ersten Ausführungsbeispiel ist die Armlehne 22b über mehr als eine Schwenkachse verschwenkbar. Die Armlehne 22b ist zwischen einer Gebrauchsstellung 26b, einer Nichtgebrauchsstellung und einer weiteren Nichtgebrauchsstellung zu dem Sitzteiler 12b verschwenkbar. Die Armlehne 22b ist in der weiteren Nichtgebrauchsstellung maximal zu der Gebrauchsstellung 26b verschwenkt.

Die Armlehne 22b ist über zwei parallel zueinander ausgerichtete und voneinander beabstandete Schwenkachsen 24b, 120b verschwenkbar. Die Armlehne 22b weist eine Schwenkachse 24b und eine weitere Schwenkachse 120b auf. Die Schwenkachse 24b ist durch das Schwenklager 72b des Sitzteilers 12b ausgebildet, welches mit der Schwenklagereinheit 70b des Anbindungsmoduls 40b gekoppelt ist. Der Sitzteiler 12b weist ein Schwenkträgerelement 122b auf. Das Schwenkträgerelement 122b ist zumindest zu einem Großteil zwischen der Schwenkachse 24b und der weiteren Schwenkachse 120b angeordnet. Das Schwenkträgerelement 122b des Sitzteilers 12b ist einteilig ausgebildet. Das Schwenkträgerelement 122b ist dazu vorgesehen, das Schwenklager 72b des Sitzteilers 12b, insbesondere die Schwenkachse 24b, relativ zu der weiteren Schwenkachse 120b zu verschwenken. Das Schwenklager 72b des Sitzteilers 12b ist direkt mit dem Schwenkträgerelement 122b verbunden. Das Schwenklager 72b des Sitzteilers 12b ist in das Schwenkträgerelement 122b des Sitzteilers 12b integriert. Das Schwenklager 72b des Sitzteilers 12b ist an einer Oberseite des Schwenkträgerelements 122b des Sitzteilers 12b angeordnet. Das Anbindungsmodul 40b ist mit dem Schwenkträgerelement 122b schwenkbar verbunden. Das Schwenkträgerelement 122b ist über die weitere Schwenkachse 120b, insbesondere zu der Aufständereinheit, verschwenkbar. Das Schwenkträgerelement 122b ist in der weiteren Nichtgebrauchsstellung zu der Nichtgebrauchsstellung verschwenkt. Das Schwenkträgerelement 122b des Sitzteilers 12b ist über die weitere Schwenkachse 120b schwenkbar zu dem Trägerelement 14b des Sitzteilers 12b gelagert. Der Sitzteiler 12b weist ein weiteres Schwenklager 124b auf. Das Schwenkträgerelement 122b des Sitzteilers 12b ist über das weitere Schwenklager 124b mit dem Trägerelement 14b des Sitzteilers 12b gekoppelt. Das weitere Schwenklager 124b bildet die weitere Schwenkachse 120b aus. Das weitere Schwenklager 124b des Sitzteilers 12b ist in das Trägerelement 14b des Sitzteilers 12b integriert. Das weitere Schwenklager 124b des Sitzteilers 12b ist an einer Oberseite des Trägerelements 14b des Sitzteilers 12b angeordnet. Das weitere Schwenklager 124b des Sitzteilers 12b ist an einer Unterseite des Schwenkträgerelements 122b des Sitzteilers 12b an dem Trägerelement 14b des Sitzteilers 12b angeordnet.

Der Sitzteiler 12b weist eine Lagerstelle 20b auf, an der eine Rückenlehne eines Flugzeugsitzes, insbesondere schwenkbar, gelagert werden kann. Die Lagerstelle 20b ist an dem Trägerelement 14b des Sitzteilers 12b angeordnet. Die Lagerstelle 20b ist koaxial zu der weiteren Schwenkachse 120b ausgebildet. Die Lagerstelle 20b ist in das weitere Schwenklager 124b integriert.

Die Armlehne 22b ist dazu vorgesehen, zuerst über die Schwenkachse 24b von der Gebrauchsstellung 26b in die Nichtgebrauchsstellung verschwenkt zu werden. Die Armlehne 22b ist danach dazu vorgesehen, mittels des Schwenkträgerelements 122b über die weitere Schwenkachse 120b von der Nichtgebrauchsstellung in die weitere Nichtgebrauchsstellung verschwenkt zu werden.

Das Anbindungsmodul 40b ist in einem Winkelbereich zwischen der Gebrauchsstellung 26b und der Nichtgebrauchsstellung schwenkbar zu dem Sitzteiler 12b, insbesondere dem Trägerelement 14b des Sitzteilers 12b, gelagert. Der Winkelbereich beträgt im vorliegenden Fall 115 Grad.

Das Schwenkträgerelement 122b ist in einem Winkelbereich zwischen der Nichtgebrauchsstellung und der weiteren Nichtgebrauchsstellung schwenkbar zu dem dem Trägerelement 14b des Sitzteilers 12b gelagert. Der Winkelbereich beträgt im vorliegenden Fall 15 Grad.

Die Armlehne 22b ist um mindestens 110 Grad von der Gebrauchsstellung 26b in die Nichtgebrauchsstellung verschwenkbar. Die Armlehne 22b ist um mindestens 120 Grad von der Gebrauchsstellung 26b in die weitere Nichtgebrauchsstellung verschwenkbar. Die Armlehne 22b ist im vorliegenden Fall um bis zu 130 Grad von der Gebrauchsstellung 26b in die weitere Nichtgebrauchsstellung verschwenkbar.

Ein Abstand 126b der Schwenkachse 24b der Armlehne 22b zu einer Unterseite 128b des Armlehnengrundkörpers 30b in der Gebrauchsstellung 26b ist kleiner als ein Abstand 130b der Schwenkachse 24b der Armlehne 22b zu einer Oberseite 132b des Armauflageelements 34b. Die Schwenkachse 124b ist, insbesondere in jeder Stellung der Armlehne 22b in dem vollständig montierten Zustand 48b, außerhalb eines geometrischen Mittelpunkts 152b der Armlehne 22b in dem Anbindungsbereich 60b angeordnet. Der geometrische Mittelpunkt 152b der Armlehne 22b weist, insbesondere in der Gebrauchsstellung der Armlehne 22b, einen gleichen Abstand zu der Oberseite 132b des Armauflageelements 34b und zu der Unterseite 128b des Armlehnengrundkörpers 30b auf, insbesondere orthogonal zu einer Aufständerebene gemessen. Die Schwenkachse 24b ist unterhalb des geometrischen Mittelpunkts 152b der Armlehne 22b in dem Anbindungsbereich 60b angeordnet.

Die Flugzeugsitzvorrichtung 10b umfasst einen Kabelkanal 84b, welcher ausgehend von dem Armlehnengrundkörper 30b durch das Anbindungsmodul 40b in den Sitzteiler 12b verläuft. Der Kabelkanal 84b ist in einem Abschnitt durch den Sitzteiler 12b geführt. Der Sitzteiler 12b, insbesondere das Schwenkträgerelement 122b, ist dazu hohl ausgebildet.

Die Flugzeugsitzvorrichtung 10b weist ein Abdeckelement 86b auf, welches mit dem Sitzteiler 12b verbunden ist. Das Abdeckelement 86b ist mit dem Trägerelement 14b des Sitzteilers 12b verbunden. Das Abdeckelement 86b bildet einen Abschnitt des Kabelkanals 84b aus, welcher auf der Vorderseite 88b des Sitzteilers 12b verläuft. Das Abdeckelement 86b ist kraftschlüssig und/oder formschlüssig mit dem Trägerelement 14b des Sitzteilers 12b verbunden.

Die Flugzeugsitzvorrichtung 10b weist ein weiteres Abdeckelement 140b auf, welches mit dem Sitzteiler 12b verbunden ist. Das weitere Abdeckelement 140b ist mit dem Schwenkträgerelement 122b des Sitzteilers 12b verbunden. Das weitere Abdeckelement 140b bildet einen weiteren Abschnitt des Kabelkanals 84b aus, welcher auf der Vorderseite 88b des Sitzteilers 12b verläuft. Das weitere Abdeckelement 140b ist kraftschlüssig, formschlüssig und/oder stoffschlüssig mit dem Schwenkträgerelement 122b des Sitzteilers 12a verbunden. Grundsätzlich wäre es auch denkbar, dass das weitere Abdeckelement 140b aus einem Guss mit dem Schwenkträgerelement 122b ist. Das weitere Abdeckelement 140b ist beweglich zu dem Abdeckelement 86b gelagert. Das weitere Abdeckelement 140b ist über die weitere Schwenkachse 120b schwenkbar zu dem Abdeckelement 86b gelagert. Das Abdeckelement 86b und das weitere Abdeckelement 140b sind zumindest in der Gebrauchsstellung 26b und in der Nichtgebrauchsstellung der Armlehne 22b zueinander überlappend angeordnet. Das Abdeckelement 86b und das weitere Abdeckelement 140b kontaktieren sich in jedem Betriebszustand.

Des Weiteren ist im Unterschied zu dem ersten Ausführungsbeispiel eine Montagerichtung in dem zweiten Ausführungsbeispiel anders ausgebildet. Der Anbindungsraum 42b der Armlehne 22b ist in der Gebrauchsstellung 26b der Armlehne 22b zu einer Rückseite 100b der Armlehne 22b hin geöffnet. Das Anbindungsmodul 40b ist in dem Montagezustand, in dem das Anbindungsmodul 40b mit dem Sitzteiler 12b verbunden ist, dazu vorgesehen, ausgehend von der Rückseite 100b der Armlehne 22b in den Anbindungsraum 42b der Armlehne 22b in Richtung einer Vorderseite 134b der Armlehne 22b eingeschoben zu werden. Eine Verbindungsrichtung des Anbindungsmoduls 40b und der Armlehne 22b ist zumindest im Wesentlichen parallel zu der Aufständerebene ausgerichtet, wenn der Armlehnengrundkörper 30b in einer Ausrichtung wie in der Gebrauchsstellung 26b positioniert ist.

Der Sitzteiler 12b weist ein Anschlagelement 136b auf. Das Anschlagelement 136b des Sitzteilers 12b ist an dem Schwenkträgerelement 122b angeordnet. Das Anschlagelement 136b des Sitzteilers 12b ist an der Rückseite 100b der Armlehne 22b angeordnet. Der Anbindungsgrundkörper 66b und der weitere Anbindungsgrundkörper bilden ein weiteres Anschlagelement 138b aus. Das weitere Anschlagelement 138b ist korrespondierend zu dem Anschlagelement 136b des Sitzteilers 12b ausgebildet. Das weitere Anschlagelement 138b ist in der Gebrauchsstellung 26b der Armlehne 22b an der Rückseite 100b der Armlehne 22b angeordnet. In der Gebrauchsstellung 26b der Armlehne 22b kontaktieren sich das Anschlagelement 136b des Sitzteilers 12b und das weitere Anschlagelement 138b.

In der Figur 11 ist eine Flugzeugsitzvorrichtung 10c in einem dritten Ausführungsbeispiel gezeigt. Die Flugzeugsitzvorrichtung 10c umfasst einen Sitzteiler 12c. Der Sitzteiler 12c weist ein Trägerelement 14c auf. Die Flugzeugsitzvorrichtung 10c umfasst eine Armlehne 22c. Im vorliegenden Fall ist die Armlehne 22c als eine Center-Armlehne ausgebildet. Die Armlehne 22c weist eine Schwenkachse 24c auf. Die Armlehne 22c ist zwischen einer Gebrauchsstellung 26c und einer Nichtgebrauchsstellung 28c zu dem Sitzteiler 12c verschwenkbar. Die Armlehne 22c ist in der Nichtgebrauchsstellung 28c maximal zu der Gebrauchsstellung 26c verschwenkt. In der Figur 11 ist die Armlehne 22c in der Gebrauchsstellung 26c der Übersichtlichkeit halber gestrichelt dargestellt. Die Armlehne 22c weist einen Armlehnengrundkörper 30c auf. Die Armlehne 22c weist ein Armauflageelement 34c auf. Die Flugzeugsitzvorrichtung 10c umfasst ein Anbindungsmodul 40c. Die Armlehne 22c weist einen Anbindungsraum 42c auf. Der Armlehnengrundkörper 30c ist in einem vollständig montierten Zustand 48c über das Anbindungsmodul 40c mit dem Sitzteiler 12c gekoppelt. Das Anbindungsmodul 40c weist einen Anbindungsgrundkörper 66c und einen nicht sichtbaren weiteren Anbindungsgrundkörper auf. In der Figur 11 ist der Anbindungsgrundkörper 66c mit der Armlehne 22c in die Nichtgebrauchsstellung 28c verschwenkt dargestellt. Die Flugzeugsitzvorrichtung 10c umfasst einen Kabelkanal 84c. Die Flugzeugsitzvorrichtung 10c weist ein Abdeckelement 86c auf, welches mit dem Sitzteiler 12c verbunden ist. Die Flugzeugsitzvorrichtung 10c weist eine Einbuchtung 112c auf.

Das dritte Ausführungsbeispiel entspricht im Wesentlichen dem ersten Ausführungsbeispiel, wobei die Armlehnengrundkörper 30a, 30c unterschiedlich geformt sind. Im Vergleich zu dem Armlehnengrundkörper 30a aus dem ersten Ausführungsbeispiel erstreckt sich der Armlehnengrundkörper 30c in der Gebrauchsstellung der Armlehne 22c an einer Unterseite 128c des Armlehnengrundkörpers 30c weniger weit von der Schwenkachse 24c weg. Bei einer Verschwenkung der Armlehne 22c von der Gebrauchsstellung 26c in die Nichtgebrauchsstellung 28c nähert sich der Armlehnengrundkörper 30c der Aufständerebene an. Durch diese Ausgestaltung kann vorteilhaft erreicht werden, dass die Armlehne 22c, insbesondere der Armlehnengrundkörper 30c, in der Nichtgebrauchsstellung 28c weniger weit in einen Bereich auf einer Vorderseite 88c des Sitzteilers 12c ragt. Dadurch kann vorteilhaft erreicht werden, dass die Armlehne 22c in der Nichtgebrauchsstellung 28c nicht in einen Rückenabstützbereich hineinragt. Dadurch kann vorteilhaft ein Komfort für einen Passagier erhöht werden, da keine störenden Bauteile, insbesondere der Armlehne 22c, den Passagier wesentlich kontaktieren.

**Bezugszeichen**

| | | | |
|---|---|---|---|
| 10 | Flugzeugsitzvorrichtung | 68 | Anbindungsgrundkörper |
| 12 | Sitzteiler | 70 | Schwenklagereinheit |
| 14 | Trägerelement | 72 | Schwenklager |
| 16 | Anbindungsstelle | 74 | Kulissenführung |
| 18 | Anbindungsstelle | 76 | Endanschlag |
| 20 | Lagerstelle | 78 | Endanschlag |
| 22 | Armlehne | 80 | Anschlagelement |
| 24 | Schwenkachse | 82 | Kulissenführung |
| 26 | Gebrauchsstellung | 84 | Kabelkanal |
| 28 | Nichtgebrauchsstellung | 86 | Abdeckelement |
| 30 | Armlehnengrundkörper | 88 | Vorderseite |
| 32 | Vorformling | 90 | Aussparung |
| 34 | Armauflageelement | 92 | Aussparung |
| 36 | Oberseite | 94 | Aussparung |
| 38 | Innenraum | 96 | Aussparung |
| 40 | Anbindungsmodul | 98 | Aussparung |
| 42 | Anbindungsraum | 100 | Rückseite |
| 44 | Montagezustand | 102 | Freigabemechanismus |
| 46 | Unterseite | 104 | Befestigungsmittel |
| 48 | Zustand | 106 | Formschlusselement |
| 50 | Befestigungsmittel | 108 | Ausnehmung |
| 52 | Befestigungsmittel | 110 | Betätigungselement |
| 54 | Montagezustand | 112 | Einbuchtung |
| 56 | Wandung | 114 | Verfahren |
| 58 | Wandung | 116 | Verfahrensschritt |
| 60 | Anbindungsbereich | 118 | Verfahrensschritt |
| 62 | Außenfläche | 120 | Schwenkachse |
| 64 | Außenfläche | 122 | Schwenkträgerelement |
| 66 | Anbindungsgrundkörper | 124 | Schwenklager |
| 126 | Abstand | 140 | Abdeckelement |
| 128 | Unterseite | 142 | Befestigungsmittel |
| 130 | Abstand | 144 | Befestigungsmittel |
| 132 | Oberseite | 146 | Formschlusselement |
| 134 | Vorderseite | 148 | Ausnehmung |
| 136 | Anschlagelement | 150 | Befestigungsmittel |
| 138 | Anschlagelement | 152 | Mittelpunkt |

## Patentansprüche

1. Flugzeugsitzvorrichtung (10a; 10b; 10c) mit einem Sitzteiler (12a; 12b; 12c), mit einer Armlehne (22a; 22b; 12c), die zwischen einer Gebrauchsstellung (26a; 26b; 26c) und einer Nichtgebrauchsstellung (28a; 28c) zu dem Sitzteiler (12a; 12b;
12c) verschwenkbar ist und die einen Armlehnengrundkörper (30a; 30b; 30c) aufweist, und mit einem Anbindungsmodul (40a; 40b; 40c), das dazu vorgesehen ist, die Armlehne (22a; 22b; 22c) schwenkbar zu dem Sitzteiler (12a; 12b; 12c) zu lagern, wobei der Armlehnengrundkörper (30a; 30b; 30c) in einem vollständig montierten Zustand (48a; 48b; 48c) über das Anbindungsmodul (40a; 40b; 40c) mit dem Sitzteiler (12a; 12b; 12c) gekoppelt ist,
**wobei**
das Anbindungsmodul (40a; 40b; 40c) schwenkbar mit dem Sitzteiler (12a; 12b; 12c) verbunden ist und in einem Montagezustand (44a), in dem das Anbindungsmodul (40a; 40b; 40c) mit dem Sitzteiler (12a; 12b; 12c) verbunden ist, zu einer Kopplung mit dem Armlehnengrundkörper (30a; 30b; 30c) vorgesehen ist,
wobei das Anbindungsmodul (40a; 40b; 40c) in dem vollständig montierten Zustand (48a; 48b; 40c) zumindest im Wesentlichen in einem Anbindungsraum (42a; 42b; 42c) der Armlehne (22a; 22b; 22c) aufgenommen ist,
wobei das Anbindungsmodul (40a; 40b; 40c) in dem Anbindungsraum (42a; 42b; 42c) der Armlehne (22a; 22b; 22c) von seitlichen Wandungen (56a, 58a) des Armlehnengrundkörpers (30a; 30b; 30c) begrenzt und zumindest zu einem Großteil verdeckt ist, **dadurch gekennzeichnet, dass** das Anbindungsmodul (40a; 40c) zumindest eine Kulissenführung (74a; 82a) aufweist, in der zumindest ein Anschlagelement (80a) des Sitzteilers (12a; 12c) angeordnet ist und die einen ersten Endanschlag (76a) für die Gebrauchsstellung (26a; 26c) und einen zweiten Endanschlag (78a) für die Nichtgebrauchsstellung (28a; 28c) ausbildet.

2. Flugzeugsitzvorrichtung (10a; 10b; 10c) nach Anspruch 1, **dadurch gekennzeichnet, dass** der Armlehnengrundkörper (30a; 30b; 30c) an dem Anbindungsmodul (40a; 40b; 40c) in einem Montagezustand (44a), in dem das Anbindungsmodul (40a; 40b; 40c) mit dem Sitzteiler (12a; 12b; 12c) verbunden ist, montierbar ist.

3. Flugzeugsitzvorrichtung (10a; 10b; 10c) nach Anspruch 1 oder 2, **dadurch gekennzeichnet, dass** der Armlehnengrundkörper (30a; 30b; 30c) mittels zumindest eines Befestigungsmittels (50a, 52a) mit dem Anbindungsmodul (40a; 40b; 40c) verbunden ist, wobei das zumindest eine Befestigungsmittel (50a, 52a) in einem vollständig montierten Zustand (48a; 48b; 48c) durch ein Armauflageelement (34a; 34b; 34c) der Armlehne (22a; 22b; 22c) verdeckt ist.

4. Flugzeugsitzvorrichtung (10a; 10b; 10c) nach einem der vorhergehenden Ansprüche, **dadurch gekennzeichnet, dass** die Armlehne (22a; 22b; 22c) in einem Anbindungsbereich (60a; 60b; 60c) der Armlehne (22a; 22b; 22c) seitliche Außenflächen (62a, 64a) aufweist, die vollständig geschlossen und von dem Armlehnengrundkörper (30a; 30b; 30c) ausgebildet sind.

5. Flugzeugsitzvorrichtung (10a; 10b; 10c) nach einem der vorhergehenden Ansprüche, **dadurch gekennzeichnet, dass** das Anbindungsmodul (40a; 40b; 40c) zumindest einen Anbindungsgrundkörper (66a, 68a; 66b; 66c) aufweist, der in dem vollständig montierten Zustand (48a; 48b; 48c) zumindest im Wesentlichen in dem Armlehnengrundkörper (30a; 30b; 30c) aufgenommen ist.

6. Flugzeugsitzvorrichtung (10a; 10b; 10c) nach Anspruch 5, **dadurch gekennzeichnet, dass** das Anbindungsmodul (40a; 40b; 40c) eine Schwenklagereinheit (70a; 70b) aufweist, die mit dem zumindest einen Anbindungsgrundkörper (66a, 68a; 66b; 66c) verbunden ist und über die das Anbindungsmodul (40a; 40b; 40c) schwenkbar an dem Sitzteiler (12a; 12b; 12c) gelagert ist.

7. Flugzeugsitzvorrichtung (10a; 10c) nach Anspruch 5 oder 6 und 1, **dadurch gekennzeichnet, dass** die zumindest eine Kulissenführung (74a, 82a) in dem zumindest einen Anbindungsgrundkörper (66a, 68a; 66c) angeordnet ist.

8. Flugzeugsitzvorrichtung (10a; 10b; 10c) nach einem der vorhergehenden Ansprüche, **dadurch gekennzeichnet, dass** der Armlehnengrundkörper (30a; 30b; 30c) einteilig, insbesondere integral, ausgebildet ist.

9. Flugzeugsitzvorrichtung (10a; 10b; 10c) nach einem der vorhergehenden Ansprüche, **dadurch gekennzeichnet, dass** ein Innenraum (38a; 38b) der Armlehne (22a; 22b; 22c) zwischen dem Armlehnengrundkörper (30a; 30b; 30c) und dem Armauflageelement (34a; 34b; 34c) frei von einer zusätzlichen Abstützstruktur ist.

10. Flugzeugsitzvorrichtung (10a; 10b; 10c) nach einem der vorhergehenden Ansprüche, **dadurch gekennzeichnet, dass** der Armlehnengrundkörper (30a; 30b; 30c) zumindest im Wesentlichen aus einem faserverstärkten Kunststoff gebildet ist.

11. Flugzeugsitzvorrichtung (10a; 10b; 10c) nach einem der vorhergehenden Ansprüche, **dadurch gekennzeichnet, dass** der Armlehnengrundkörper (30a; 30b; 30c) eine Kunststoffmatrix und zumindest einen in die Kunststoffmatrix eingebetteten Vorformling (32a) aufweist, der insbesondere mittels eines Tailored-Fiber-Placement-Prozesses hergestellt ist.

12. Flugzeugsitzvorrichtung (10a; 10b; 10c) nach Anspruch 11, **dadurch gekennzeichnet, dass** der Armlehnengrundkörper (30a; 30b; 30c) mittels eines Resin-Transfer-Molding-Prozesses hergestellt ist, wobei der Vorformling (32a) dazu vorgesehen ist, während des Resin-Transfer-Molding-Prozesses in die Kunststoffmatrix eingebettet zu werden.

13. Flugzeugsitzvorrichtung (10b) nach einem der vorhergehenden Ansprüche, **dadurch gekennzeichnet, dass** die Armlehne (22b) über zwei parallel zueinander ausgerichtete und voneinander beabstandete Schwenkachsen (24b, 120b) verschwenkbar ist.

14. Flugzeugsitzvorrichtung (10a; 10b; 10c) nach Anspruch 13, **dadurch gekennzeichnet, dass** die Armlehne (22a; 22b; 22c) um mindestens 110 Grad, insbesondere um mindestens 120 Grad, von der Gebrauchsstellung (26a; 26b; 26c) in die Nichtgebrauchsstellung (28a; 28c) und/oder eine weitere Nichtgebrauchsstellung verschwenkbar ist.

15. Flugzeugsitzvorrichtung (10b) nach einem der vorhergehenden Ansprüche, **dadurch gekennzeichnet, dass** ein Abstand (126b) einer Schwenkachse (24b) der Armlehne (22b) zu einer Unterseite (128b) des Armlehnengrundkörpers (30b), insbesondere in der Gebrauchsstellung (26b), kleiner ist als ein Abstand (130b) der Schwenkachse (24b) der Armlehne (22b) zu einer Oberseite (132b) des Armauflageelements (34b).

16. Flugzeugsitzvorrichtung (10a; 10b; 10c) nach einem der vorhergehenden Ansprüche, **gekennzeichnet durch** zumindest einen Kabelkanal (84a; 84b; 84c), welcher ausgehend von dem Armlehnengrundkörper (30a; 30b; 30c) durch das Anbindungsmodul (40a; 40b; 40c) in den Sitzteiler (12a; 12b; 12c) verläuft.

17. Flugzeugsitzvorrichtung (10a; 10b; 10c) nach einem der vorhergehenden Ansprüche, **gekennzeichnet durch** eine Einbuchtung (112a; 112b; 112c), die in der Gebrauchsstellung (26a; 26b; 26c) direkt an einer Vorderseite (88a; 88b; 88c) des Sitzteilers (12a; 12b; 12c) unterhalb des Armlehnengrundkörpers (30a; 30b; 30c) angeordnet ist.

18. Verfahren zur Herstellung eines Armlehnengrundkörpers (30a) einer Armlehne (22a) einer Flugzeugsitzvorrichtung (10a) nach einem der vorhergehenden Ansprüche, **dadurch gekennzeichnet, dass** in einem ersten Verfahrensschritt in einem Tailored-Fiber-Placement-Prozess (TFP-Prozess) ein Vorformling (32a) aus einem Stickgrund mit darauf aufgestickten Fasermatten oder Faserbündeln hergestellt wird, wobei die Fasermatten entlang der Lastpfade des Armlehnengrundkörpers (30a) ausgelegt oder in stark belasteten Bereichen, wie etwa im Bereich von Lagerstellen, mehr Faserbündel in den Vorformling (32a) integriert werden.

## Claims

1. An aircraft seat device (10a; 10b; 10c) having a seat divider (12a; 12b; 12c), having an armrest (22a; 22b; 12c) which is pivotable, with respect to the seat divider (12a; 12b; 12c), between a position of use (26a; 26b; 26c) and a position of non-use (28a; 28c) and which has an armrest base body (30a; 30b; 30c), and having an attachment module (40a; 40b; 40c), which is configured to support the armrest (22a; 22b; 22c) in a pivotable manner with respect to the seat divider (12a; 12b; 12c), wherein the armrest base body (30a; 30b; 30c), in a fully installed state (48a; 48b; 48c), is coupled with the seat divider (12a; 12b; 12c) via the attachment module (40a; 40b; 40c),
wherein the attachment module (40a; 40b; 40c) is pivotably connected to the seat divider (12a; 12b; 12c) and is cofigured, in an installation state (44a) in which the attachment module (40a; 40b; 40c) is connected to the seat divider (12a; 12b; 12c), for coupling with the armrest body (30a; 30b; 30c),
wherein the attachment module (40a; 40b; 40c), in the fully installed state (48a; 48b; 40c), is received at least substantially in an attachment space (42a; 42b; 42c) of the armrest (22a; 22b; 22c),
wherein the attachment module (40a; 40b; 40c) in the attachment space (42a; 42b; 42c) of the armrest (22a; 22b; 22c) is delimited by lateral walls (56a, 58a) of the armrest base body (30a; 30b; 30c) and is at least largely concealed, **characterized in that** the attachment module (40a; 40c) has at least one slotted guide (74a; 82a), in which at least one stop element (80a) of the seat divider (12a; 12c) is arranged and which forms a first end stop (76a) for the position of use (26a; 26c) and a second end stop (78a) for the position of non-use (28a; 28c).

2. The aircraft seat device (10a; 10b; 10c) according to claim 1, **characterized in that,** in an installation state (44a) in which the attachment module (40a; 40b; 40c) is connected to the seat divider (12a; 12b; 12c), the armrest base body (30a; 30b; 30c) can be installed on the attachment module (40a; 40b; 40c).

3. The aircraft seat device (10a; 10b; 10c) according to claim 1 or 2, **characterized in that** the armrest base body (30a; 30b; 30c) is connected to the attachment module (40a; 40b; 40c) by means of at least one fastening element (50a, 52a), wherein the at least one fastening element (50a, 52a), in a fully installed state (48a; 48b; 48c), is concealed by an arm support element (34a; 34b; 34c) of the armrest (22a; 22b; 22c).

4. The aircraft seat device (10a; 10b; 10c) according to any one of the preceding claims, **characterized in that** the armrest (22a; 22b; 22c), in an attachment region (60a; 60b; 60c) of the armrest (22a; 22b; 22c), has lateral outer faces (62a, 64a) that are fully closed and formed by the armrest base body (30a; 30b; 30c).

5. The aircraft seat device (10a; 10b; 10c) according to any one of the preceding claims, **characterized in that** the attachment module (40a; 40b; 40c) has at least one attachment base body (66a, 68a; 66b; 66c) that, in a fully installed state (48a; 48b; 48c), is at least substantially received in the armrest base body (30a; 30b; 30c).

6. The aircraft seat device (10a; 10b; 10c) according to claim 5, **characterized in that** the attachment module (40a; 40b; 40c) has a pivot bearing unit (70a; 70b), which is connected to the at least one attachment base body (66a, 68a; 66b; 66c) and via which the attachment module (40a; 40b; 40c) is pivotably supported on the seat divider (12a; 12b; 12c).

7. The aircraft seat device (10a; 10c) according to claim 5 or 6 and 1, **characterized in that** the at least one slotted guide (74a, 82a) is arranged in the at least one attachment base body (66a, 68a; 66c).

8. The aircraft seat device (10a; 10b; 10c) according to any one of the preceding claims, **characterized in that** the armrest base body (30a; 30b; 30c) is realized in a one-part implementation, in particular integrally.

9. The aircraft seat device (10a; 10b; 10c) according to any one of the preceding claims, **characterized in that** an inner space (38a; 38b) of the armrest (22a; 22b; 22c) between the armrest base body (30a; 30b; 30c) and the arm support element (34a; 34b; 34c) does not have an additional support structure.

10. The aircraft seat device (10a; 10b; 10c) according to any one of the preceding claims, **characterized in that** the armrest base body (30a; 30b; 30c) is made at least substantially of a fiber-reinforced plastic.

11. The aircraft seat device (10a; 10b; 10c) according to any one of the preceding claims, **characterized in that** the armrest base body (30a; 30b; 30c) has a plastic matrix and at least one preform (32a), which in particular is fabricated by means of a tailored fiber placement process, embedded in the plastic matrix.

12. The aircraft seat device (10a; 10b; 10c) according to claim 11, **characterized in that** the armrest base body (30a; 30b; 30c) is fabricated by means of a resin transfer molding process, wherein the preform (32a) is configured to be embedded into the plastic matrix during the resin transfer molding process.

13. The aircraft seat device (10b) according to any one of the preceding claims, **characterized in that** the armrest (22b) is pivotable via two pivot axes (24b, 120b) that are aligned parallel to each other and spaced apart from each other.

14. The aircraft seat device (10a; 10b; 10c) according to claim 13, **characterized in that** the armrest (22a; 22b; 22c) is pivotable by at least 110 degrees, in particular by at least 120 degrees, from the position of use (26a; 26b; 26c) to the position of non-use (28a; 28c) and/or a further position of non-use.

15. The aircraft seat device (10b) according to any one of the preceding claims, **characterized in that** a distance (126b) of a pivot axis (24b) of the armrest (22b) from an underside (128b) of the armrest base body (30b), in particular in the position of use (26b), is less than a distance (130b) of the pivot axis (24b) of the armrest (22b) from an upper side (132b) of the arm support element (34b).

16. The aircraft seat device (10a; 10b; 10c) according to any one of the preceding claims, **characterized by** at least one cable channel (84a; 84b; 84c) that, starting from the armrest base body (30a; 30b; 30c), extends through the attachment module (40a; 40b; 40c) into the seat divider (12a; 12b; 12c).

17. The aircraft seat device (10a; 10b; 10c) according to any one of the preceding claims, **characterized by** an indentation (112a; 112b; 112c) that, in the position of use (26a; 26b; 26c), is arranged directly on a front side (88a; 88b; 88c) of the seat divider (12a; 12b; 12c), beneath the armrest base body (30a; 30b; 30c).

18. A method for a fabrication of an armrest base body (30a) of an armrest (22a) of an aircraft seat device (10a) according to any one of the preceding claims, **characterized in that,** in a first method step, in a tailored fiber placement process (TFP process) a preform (32a) is fabricated from an embroidery base having fiber mats or fiber bundles embroidered thereon, wherein the fiber mats are laid out along the load paths of the armrest base body (30a) or in regions subject to high loads, as, for instance, in the region of bearing points, more fiber bundles are integrated into the preform (32a).

## Revendications

1. Dispositif de siège d'avion (10a; 10b; 10c) comprenant un diviseur de siège (12a;
12b; 12c), comprenant un accoudoir (22a; 22b; 12c) qui est pivotable par rapport au diviseur de siège (12a; 12b; 12c) entre une position d'utilisation (26 ; 26b; 26c) et une position de non-utilisation (28a; 28c) et qui présente un corps de base d'accoudoir (30a; 30b; 30c), et comprenant un module de liaison (40a; 40b; 40c) qui est prévu pour supporter l'accoudoir (22a; 22b; 22c) de manière pivotante par rapport au diviseur de siège (12a; 12b; 12c), le corps de base d'accoudoir (30a; 30b; 30c) étant couplé dans un état complètement monté (48a; 48b; 48c) par le biais du module de liaison (40a; 40b; 40c) au diviseur de siège (12a; 12b; 12c), où
le module de liaison (40a; 40b; 40c) est relié de manière pivotante au diviseur de siège (12a; 12b; 12c) et est prévu dans un état de montage (44a), dans lequel le module de liaison (40a; 40b; 40c) est relié au diviseur de siège (12a; 12b; 12c), pour un couplage avec le corps de base d'accoudoir (30a; 30b; 30c),
où le module de liaison (40a; 40b; 40c) est reçu dans l'état complètement monté (48a; 48b; 40c) au moins essentiellement dans un espace de liaison (42a; 42b; 42c) de l'accoudoir (22a; 22b; 22c),
où le module de liaison (40a; 40b; 40c) est limité dans l'espace de liaison (42a; 42b; 42c) de l'accoudoir (22a; 22b; 22c) par des parois latérales (56a, 58a) du corps de base d'accoudoir (30a; 30b; 30c) et est recouvert au moins en grande partie, **caractérisé en ce que** le module de liaison (40a; 40c) présente au moins un guidage à coulisse (74a; 82a) dans lequel est disposé au moins un élément de butée (80a) du diviseur de siège (12a; 12c) et qui forme une première butée d'extrémité (76a) pour la position d'utilisation (26a; 26c) et une deuxième butée d'extrémité (78a) pour la position de non-utilisation (28a; 28c).

2. Dispositif de siège d'avion (10a; 10b; 10c) selon la revendication 1, **caractérisé en ce que** le corps de base d'accoudoir (30a; 30b; 30c) peut être monté sur le module de liaison (40a; 40b; 40c) dans un état de montage (44a), dans lequel le module de liaison (40a; 40b; 40c) est relié au diviseur de siège (12a; 12b; 12c).

3. Dispositif de siège d'avion (10a; 10b; 10c) selon la revendication 1 ou 2, **caractérisé en ce que** le corps de base d'accoudoir (30a; 30b; 30c) est relié au module de liaison (40a; 40b; 40c) au moyen d'au moins un moyen de fixation (50a, 52a), où l'au moins un moyen de fixation (50a, 52a) est recouvert dans un état complètement monté (48a; 48b; 48c) par un élément d'appui de bras (34a; 34b; 34c) de l'accoudoir (22a; 22b; 22c).

4. Dispositif de siège d'avion (10a; 10b; 10c) selon l'une quelconque des revendications précédentes, **caractérisé en ce que** l'accoudoir (22a; 22b; 22c) présente dans une zone de liaison (60a; 60b; 60c) de l'accoudoir (22a; 22b; 22c) des surfaces extérieures latérales (62a, 64a) qui sont complètement fermées et formées par le corps de base d'accoudoir (30a; 30b; 30c).

5. Dispositif de siège d'avion (10a; 10b; 10c) selon l'une quelconque des revendications précédentes, **caractérisé en ce que** le module de liaison (40a; 40b; 40c) présente au moins un corps de base de liaison (66a, 68a; 66b; 66c) qui est reçu dans l'état complètement monté (48a; 48b; 48c) au moins essentiellement dans le corps de base d'accoudoir (30a; 30b; 30c).

6. Dispositif de siège d'avion (10a; 10b; 10c) selon la revendication 5, **caractérisé en ce que** le module de liaison (40a; 40b; 40c) présente une unité de palier pivotant (70a; 70b) qui est reliée à l'au moins un corps de base de liaison (66a, 68a; 66b; 66c) et par le biais de laquelle le module de liaison (40a; 40b; 40c) est monté de manière pivotante sur le diviseur de siège (12a; 12b; 12c).

7. Dispositif de siège d'avion (10a; 10c) selon la revendication 5 ou 6 et 1, **caractérisé en ce que** l'au moins un guidage à coulisse (74a, 82a) est disposé dans l'au moins un corps de base de liaison (66a, 68a; 66c).

8. Dispositif de siège d'avion (10a; 10b; 10c) selon l'une quelconque des revendications précédentes, **caractérisé en ce que** le corps de base d'accoudoir (30a; 30b; 30c) est réalisé d'une seule pièce, en particulier intégralement.

9. Dispositif de siège d'avion (10a; 10b; 10c) selon l'une quelconque des revendications précédentes, **caractérisé en ce qu'**un espace intérieur (38a; 38b) de l'accoudoir (22a; 22b; 22c) entre le corps de base d'accoudoir (30a; 30b; 30c) et l'élément d'appui de bras (34a; 34b; 34c) est exempt d'une structure d'appui supplémentaire.

10. Dispositif de siège d'avion (10a; 10b; 10c) selon l'une quelconque des revendications précédentes, **caractérisé en ce que** le corps de base d'accoudoir (30a; 30b; 30c) est formé au moins essentiellement à partir d'une matière plastique renforcée par des fibres.

11. Dispositif de siège d'avion (10a; 10b; 10c) selon l'une quelconque des revendications précédentes, **caractérisé en ce que** le corps de base d'accoudoir (30a; 30b; 30c) présente une matrice en matière plastique et au moins une préforme (32a) incorporée dans la matrice en matière plastique, qui est fabriquée en particulier au moyen d'un processus de placement de fibres adapté.

12. Dispositif de siège d'avion (10a; 10b; 10c) selon la revendication 11, **caractérisé en ce que** le corps de base d'accoudoir (30a; 30b; 30c) est fabriqué au moyen d'un processus de moulage par transfert de résine, la préforme (32a) étant prévue pour être incorporée dans la matrice en matière plastique pendant le processus de moulage par transfert de résine.

13. Dispositif de siège d'avion (10b) selon l'une quelconque des revendications précédentes, **caractérisé en ce que** l'accoudoir (22b) est pivotable par le biais de deux axes de pivotement (24b, 120b) orientés parallèlement l'un à l'autre et espacés l'un de l'autre.

14. Dispositif de siège d'avion (10a; 10b; 10c) selon la revendication 13, **caractérisé en ce que** l'accoudoir (22a; 22b; 22c) est pivotable d'au moins 110 degrés, en particulier d'au moins 120 degrés, de la position d'utilisation (26a; 26b; 26c) dans la position de non-utilisation (28a; 28c) et/ou une autre position de non-utilisation.

15. Dispositif de siège d'avion (10b) selon l'une quelconque des revendications précédentes, **caractérisé en ce qu'**une distance (126b) d'un axe de pivotement (24b) de l'accoudoir (22b) par rapport à un côté inférieur (128b) du corps de base d'accoudoir (30b), en particulier dans la position d'utilisation (26b), est inférieure à une distance (130b) de l'axe de pivotement (24b) de l'accoudoir (22b) par rapport à un côté supérieur (132b) de l'élément d'appui de bras (34b).

16. Dispositif de siège d'avion (10a; 10b; 10c) selon l'une quelconque des revendications précédentes, **caractérisé par** au moins un canal de câble (84a; 84b; 84c) qui s'étend à partir du corps de base d'accoudoir (30a; 30b; 30c) à travers le module de liaison (40a; 40b; 40c) dans le diviseur de siège (12a; 12b; 12c).

17. Dispositif de siège d'avion (10a; 10b; 10c) selon l'une quelconque des revendications précédentes, **caractérisé par** un renfoncement (112a; 112b; 112c) qui est disposé dans la position d'utilisation (26a; 26b; 26c) directement sur un côté avant (88a; 88b; 88c) du diviseur de siège (12a; 12b; 12c) en dessous du corps de base d'accoudoir (30a; 30b; 30c).

18. Procédé de fabrication d'un corps de base d'accoudoir (30a) d'un accoudoir (22a) d'un dispositif de siège d'avion (10a) selon l'une quelconque des revendications précédentes, **caractérisé en ce que** dans une première étape de procédé, dans un processus de placement de fibres adapté (TFP), une préforme (32a) est fabriquée à partir d'un fond de broderie avec des mats de fibres ou des faisceaux de fibres brodés sur celui-ci, où les mats de fibres sont conçus le long des chemins de charge du corps de base d'accoudoir (30a) ou dans des régions fortement chargées, comme par exemple dans la région de points de stockage, plus de faisceaux de fibres sont intégrés dans la préforme (32a).
